# EUROPEAN PATENT APPLICATION

(11) **EP 4 362 494 A2**
(43) Date of publication of application: **01.05.2024**
(21) Application number: 23206127.5
(22) Date of filing: 26.10.2023
(51) Int. Cl.: H04R 1/10, H04M 3/56

(54) **EARPHONE AND CASE OF EARPHONE**

(30) Priority: 31.10.2022 JP 2022174635
(71) Applicant: Panasonic Intellectual Property Management Co., Ltd., Kadoma-shi, Osaka 571-0057 (JP)
(72) Inventor: TAKAHASHI, Takeshi, Kadoma-shi, 571-0057 (JP)
(74) Representative: Eisenführ Speiser

(57) **Abstract**

An earphone includes a communication interface capable of performing data communication with an own user terminal communicably connected to at least one another user terminal via a network, a first microphone configured to collect a speech voice of at least one another user located near the user during a conference, a buffer configured to accumulate collected audio data of the speech voice of the other user, which is collected by the first microphone, and a signal processing unit configured to execute, by using audio-processed data of the other user speech voice transmitted from the other user terminal to the own user terminal via the network during the conference and the collected audio data accumulated in the buffer, cancellation processing for canceling a component of the speech voice of the other user included in the audio-processed data.

## Description

### TECHNICAL FIELD

The present disclosure relates to an earphone and a case of an earphone.

### BACKGROUND ART

With the recent epidemic or spread of the novel coronavirus disease or the like, telework (so-called telecommuting) has become more prevalent than ever before in offices. Although it is considered that such an infectious disease will converge sooner or later, in industries or businesses which depend on telework or are found to be able to deal with work by telework, a working pattern does not completely return to a working pattern of office work in principle as before the epidemic of the novel coronavirus disease or the like, and a working pattern that takes the best of both office work and telecommuting is conceivable, for example.

For example, Patent Literature 1 discloses a communication system that smoothly performs communication between a person who works at a workplace and a telecommuter, relieves loneliness of the telecommuter, and improves work efficiency. The communication system includes a plurality of terminals arranged at multiple points, and a communication device that controls communication between the terminals via a network and executes an audio conference. The communication device includes a conference room processing unit that constructs a shared conference room normally used by each terminal and one or two or more individual conference rooms individually used by a specific group of each terminal and provides an audio conference for each conference room to which each terminal belongs.

### CITATION LIST

### PATENT LITERATURE

Patent Literature 1: JP2020-141208A

### SUMMARY OF INVENTION

In a case where the above convergence of the novel coronavirus disease or the like is expected, a person working in an office and a person working at home may be mixed. Therefore, even in a conference held in an office, a commuting participant and a telecommuting participant are mixed. In this case, when the commuting participant uses a speakerphone with a microphone for a remote conference (hereinafter, abbreviated as a "speakerphone"), the telecommuting participant feels alienated in the conference. Specifically, there are problems that (1) it is hardly known what a person other than the commuting participant who is speaking near the microphone of the speakerphone is uttering, (2) when a discussion of the conference progresses with the commuting participant only, the telecommuting participant cannot keep up with the discussion, and (3) an entire atmosphere in a conference room can be known by turning on a camera, but not all commuting participants individually turn on cameras thereof, and thus it is difficult to know an atmosphere such as facial expressions of all participants of the conference.

In order to solve the above problems (1) to (3), the following measures are conceivable. For example, as a first measure, it is conceivable to arrange a plurality of connected speakerphones in a conference room. Accordingly, it is possible to collect sounds from all directions widely in the conference room, and it is expected to pick up utterances of a plurality of commuting participants in the conference room. However, with the first measure, it is necessary to prepare a plurality of dedicated devices (that is, speakerphones), and an increase in cost is unavoidable.

In addition, as a second measure, it is conceivable that all participants including a commuting participant and a telecommuting participant wear headsets, earphones with microphones, or the like and participate in a conference in mind of participating from their own seats without using a conference room in a company. Accordingly, the above problems (1) to (3) can be solved. However, in a case where the second measure is used, a new problem occurs. That is, there is a problem that in a case where a plurality of commuting participants participating in the same conference are physically close to each other, when one of the commuting participants speaks, both a direct voice of the speech and an audio of the speech after audio processing by a conference system are heard, making it difficult to hear the speech of the same person. In other words, since a voice of the same person is heard again with a delay due to the audio processing after the direct voice, there is a sense of incongruity, and even if another participant utters, it is difficult to hear the utterance because of the delayed audio.

The present disclosure has been devised in view of the above circumstances in the related art, and an object of the present disclosure is to provide an earphone and a case of an earphone that prevent an omission in listening of a listener to a speech content and support smooth progress of a conference or the like in which a commuting participant and a telecommuting participant are mixed.

The present disclosure provides an earphone to be worn by a user. The earphone includes a communication interface capable of performing data communication with an own user terminal communicably connected to at least one another user terminal via a network, a first microphone configured to collect a speech voice of at least one another user located near the user during a conference, a buffer configured to accumulate collected audio data of the speech voice of the other user, which is collected by the first microphone, and a signal processing unit configured to execute, by using audio-processed data of the other user speech voice transmitted from the other user terminal to the own user terminal via the network during the conference and the collected audio data accumulated in the buffer, cancellation processing for canceling a component of the speech voice of the other user included in the audio-processed data.

Further, the present disclosure provides an earphone to be worn by a user. The earphone includes a communication interface capable of performing data communication with an own user terminal communicably connected to at least one another user terminal via a network and another earphone to be worn by at least one another user located near the user; a buffer configured to accumulate collected audio data of a speech voice of the other user during a conference, which is collected by the other earphone and transmitted from the other earphone; and a signal processing unit configured to execute, by using audio-processed data of the other user speech voice transmitted from the other user terminal to the own user terminal via the network during the conference and the collected audio data accumulated in the buffer, cancellation processing for canceling a component of the speech voice of the other user included in the audio-processed data.

Furthermore, the present disclosure provides a case of an earphone to be worn by a user. The case is connected to the earphone such that data communication can be performed. The case includes a communication interface capable of performing data communication with an own user terminal communicably connected to at least one another user terminal via a network; an accessory case microphone configured to collect a speech voice of at least one another user located near the user during a conference; a buffer configured to accumulate collected audio data of the speech voice of the other user, which is collected by the accessory case microphone; and a signal processing unit configured to execute, by using audio-processed data of the other user speech voice transmitted from the other user terminal to the own user terminal via the network during the conference and the collected audio data accumulated in the buffer, cancellation processing for canceling a component of the speech voice of the other user included in the audio-processed data.

In addition, the present disclosure provides a case of an earphone to be worn by a user. The case is connected to the earphone such that data communication can be performed. The case includes a first communication interface capable of performing data communication with an own user terminal communicably connected to at least one another user terminal via a network; a second communication interface capable of performing data communication with another accessory case connected to another earphone to be worn by at least one another user located near the user; a buffer configured to accumulate collected audio data of a speech voice of the other user during a conference, which is collected by the other earphone and transmitted from the other accessory case; and a signal processing unit configured to execute, by using audio-processed data of the other user speech voice transmitted from the other user terminal to the own user terminal via the network during the conference and the collected audio data accumulated in the buffer, cancellation processing for canceling a component of the speech voice of the other user included in the audio-processed data.

According to the present disclosure, in a conference or the like in which a commuting participant and a telecommuting participant are mixed, it is possible to prevent an omission in listening of a listener to a speech content and support smooth progress of the conference or the like.

### BRIEF DESCRIPTION OF DRAWINGS

Fig. 1 is a diagram showing a system configuration example of a conference system according to a first embodiment;
Fig. 2 is a block diagram showing hardware configuration examples of left and right earphones, respectively;
Fig. 3 is a diagram showing external appearance examples when viewing front sides of operation input units of the left and right earphones, respectively;
Fig. 4 is a diagram showing external appearance examples when viewing back sides of operation input units of the left and right earphones, respectively;
Fig. 5 is a diagram schematically showing an operation outline example of the conference system according to the first embodiment;
Fig. 6 is a flowchart showing an operation procedure example of the earphones according to the first embodiment in time series;
Fig. 7 is a diagram showing a system configuration example of a conference system according to a second embodiment;
Fig. 8 is a diagram schematically showing an operation outline example of the conference system according to the second embodiment;
Fig. 9 is a sequence diagram showing an operation procedure example of the conference system according to the second embodiment in time series;
Fig. 10 is a diagram showing a system configuration example of a conference system according to a third embodiment;
Fig. 11 is a block diagram showing hardware configuration examples of left and right earphones, respectively;
Fig. 12 is a block diagram showing a hardware configuration example of a charging case according to the third embodiment;
Fig. 13 is a diagram schematically showing an operation outline example of the conference system according to the third embodiment;
Fig. 14 is a flowchart showing an operation procedure example of the charging case according to the third embodiment in time series;
Fig. 15 is a diagram showing a system configuration example of a conference system according to a fourth embodiment;
Fig. 16 is a block diagram showing hardware configuration examples of a charging case according to the fourth embodiment;
Fig. 17 is a diagram schematically showing an operation outline example of the conference system according to the fourth embodiment; and
Fig. 18 is a sequence diagram showing an operation procedure example of the conference system according to the fourth embodiment in time series.

### DESCRIPTION OF EMBODIMENTS

Hereinafter, embodiments specifically disclosing an earphone and a case of an earphone according to the present disclosure will be described in detail with reference to the drawings as appropriate. However, the unnecessarily detailed description may be omitted. For example, the detailed description of already well-known matters and the repeated description of substantially the same configuration may be omitted. This is to avoid the following description from being unnecessarily redundant and facilitate understanding by those skilled in the art. The accompanying drawings and the following description are provided for those skilled in the art to fully understand the present disclosure, and are not intended to limit the subject matter described in the claims.

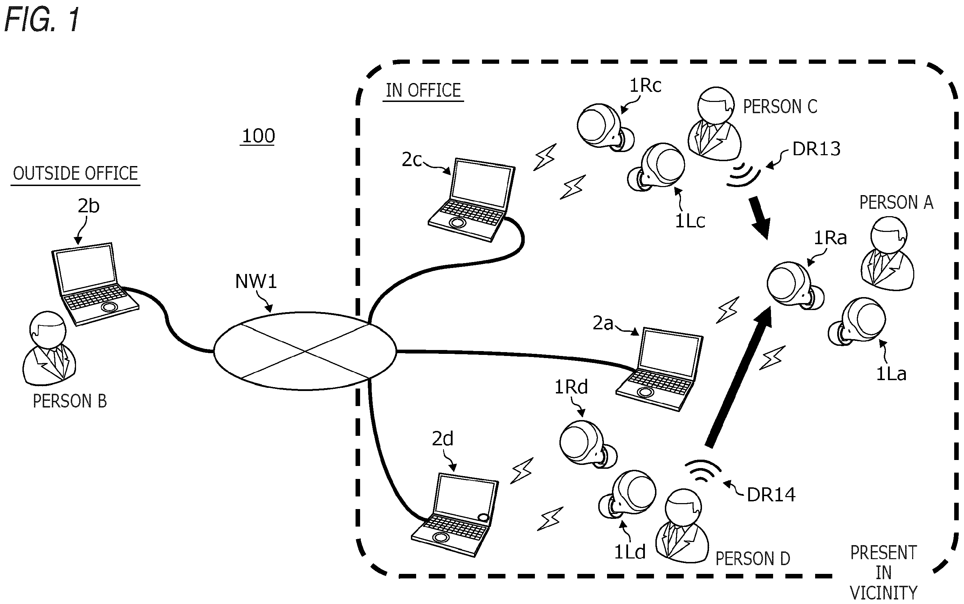

A remote web conference held in an office or the like will be described as an example of a use case using an earphone and a case of an earphone according to an embodiment. The remote web conference is held by an organizer who is any one of a plurality of participants such as employees. Communication devices (for example, a laptop personal computer (PC) and a tablet terminal) respectively owned by all participants including the organizer are connected to a network (see Fig. 1 and the like) to constitute a conference system. The conference system timely transmits video and audio data signals during the conference, including the time of utterance of the participant, to the communication devices (see above) used by the respective participants. The use case of the earphone and the case of the earphone according to the present embodiment are not limited to the remote web conference.

In order to make the following description easy to understand, the participants mentioned here include a person working in an office and a person working at home. However, all the participants may be persons working in the office or persons working at home. In the following description, the "participant of the remote web conference" may be referred to as a "user". In addition, when a description is made focused on a specific person among the participants, the specific person may be referred to as an "own user", and participants other than the specific person may be referred to as "the other users" for distinction.

### (First Embodiment)

In a first embodiment, an example will be described in which, when a person A among a plurality of participants in a remote web conference is focused on as a specific person, in order to prevent a bad influence caused by a delay in hearing a speech voice of another participant (a person C or a person D) located near the person A via a network after hearing a direct voice of the speech voice of the other participant (the person C or the person D) during the remote web conference, an earphone worn by the person A supports easiness of hearing of the person A by executing echo cancellation processing using the direct voice of the speech voice of the other participant as a reference signal.

### <System Configuration>

First, a system configuration example of a conference system 100 according to the first embodiment will be described with reference to Fig. 1. Fig. 1 is a diagram showing the system configuration example of the conference system 100 according to the first embodiment. The conference system 100 includes at least laptop PCs 2a, 2b, 2c, and 2d, and earphones 1La, 1Ra, 1Lc, 1Rc, 1Ld, and 1Rd. The laptop PCs 2a, 2b, 2c, and 2d are connected via a network NW1 so as to be able to communicate data signals with each other.

The network NW1 is a wired network, a wireless network, or a combination of a wired network and a wireless network. The wired network corresponds to, for example, at least one of a wired local area network (LAN), a wired wide area network (WAN), and power line communication (PLC), and may be another network configuration capable of wired communication. On the other hand, the wireless network corresponds to, for example, at least one of a wireless LAN such as Wi-Fi (registered trademark), a wireless WAN, short-range wireless communication such as Bluetooth (registered trademark), and a mobile communication network such as 4G or 5G, and may be another network configuration capable of wireless communication.

The laptop PC 2a is an example of an own user terminal, and is a communication device used by the person A (an example of a user) participating in the remote web conference. The laptop PC 2a is installed with video and audio processing software for the remote web conference in an executable manner. The laptop PC 2a can communicate various data signals with the other laptop PCs 2b, 2c, and 2d via the network NW1 by using the video and audio processing software during the remote web conference. When the person A participates in the remote web conference in an office (for example, at his/her seat), the laptop PC 2a is connected to the earphones 1La and 1Ra worn by the person A such that an audio data signal can be input and output. Since a hardware configuration of the laptop PC 2a is the same as a normal configuration of a so-called known laptop PC, including a processor, a memory, a hard disk, a communication interface, a built-in camera, and the like, the description of the normal configuration will be omitted in the present description. The video and audio processing software executed by the laptop PC 2a is specifically implemented by processing based on cooperation of a processor and a memory included in the laptop PC 2a, and has a function of executing known signal processing on a video data signal acquired by a built-in camera of the laptop PC 2a and an audio data signal collected by speech microphones MCL1 and MCR1 of the earphones 1La and 1Ra, and transmitting the processed signals to the other laptop PCs (for example, the laptop PCs 2b, 2c, and 2d) via the network NW1.

The laptop PC 2b is an example of another user terminal, and is a communication device used by a person B (an example of another user) participating in the remote web conference. The laptop PC 2b is installed with video and audio processing software for the remote web conference in an executable manner. The laptop PC 2b can communicate various data signals with the other laptop PCs 2a, 2c, and 2d via the network NW1 by using the video and audio processing software during the remote web conference. When the person B participates in the remote web conference outside the office, the laptop PC 2b is connected to a headset (not shown) or an earphone with a microphone (not shown) worn by the person B such that an audio data signal can be input and output. Similarly to the laptop PC 2a, a hardware configuration of the laptop PC 2b is the same as a normal configuration of a so-called known laptop PC, including a processor, a memory, a hard disk, a communication interface, a built-in camera, and the like, and thus the description of the normal configuration will be omitted in the present description. The video and audio processing software executed by the laptop PC 2b is specifically implemented by processing based on cooperation of a processor and a memory included in the laptop PC 2b, and has a function of executing known signal processing on a video data signal acquired by a built-in camera of the laptop PC 2b and an audio data signal collected by a speech microphone (not shown) of the earphone (not shown), and transmitting the processed signals to the other laptop PCs (for example, the laptop PCs 2a, 2c, and 2d) via the network NW1.

The laptop PC 2c is an example of another user terminal, and is a communication device used by the person C (an example of another user) participating in the remote web conference. The person C is located near the person A and participates in the remote web conference. Therefore, during the remote web conference, a direct voice DR13 of a speech voice spoken by the person C propagates to both ears of the person A located near the person C. That is, the person A not only hears a data signal of a speech voice of another participant transmitted to the laptop PC 2a through the earphones 1La and 1Ra, but also hears the direct voice DR13 propagating in the space. Therefore, the person A hears, for example, a data signal of the speech voice of the person C transmitted to the laptop PC 2a and the direct voice DR13 of the speech voice of the person C, so that there is a problem that the person A is highly likely to hear the same content of the speech voice of the person C twice. The laptop PC 2c is installed with video and audio processing software for the remote web conference in an executable manner. The laptop PC 2c can communicate various data signals with the other laptop PCs 2a, 2b, and 2d via the network NW1 by using the video and audio processing software during the remote web conference. When the person C participates in the remote web conference in the office, the laptop PC 2c is connected to the earphones 1Lc and 1Rc worn by the person C such that an audio data signal can be input and output. Similarly to the laptop PCs 2a and 2b, a hardware configuration of the laptop PC 2c is the same as a normal configuration of a so-called known laptop PC, including a processor, a memory, a hard disk, a communication interface, a built-in camera, and the like, and thus the description of the normal configuration will be omitted in the present description. The video and audio processing software executed by the laptop PC 2c is specifically implemented by processing based on cooperation of a processor and a memory included in the laptop PC 2c, and has a function of executing known signal processing on a video data signal acquired by a built-in camera of the laptop PC 2c and an audio data signal collected by speech microphones MCL1 and MCR1 of the earphones 1Lc and 1Rc, and transmitting the processed signals to the other laptop PCs (for example, the laptop PCs 2a, 2b, and 2d) via the network NW1.

The laptop PC 2d is an example of another user terminal, and is a communication device used by the person D (an example of another user) participating in the remote web conference. The person D is located near the person A and participates in the remote web conference. Therefore, during the remote web conference, a direct voice DR14 of a speech voice spoken by the person D propagates to both ears of the person A located near the person D. That is, the person A not only hears a data signal of a speech voice of another participant transmitted to the laptop PC 2a through the earphones 1La and 1Ra, but also hears the direct voice DR14 propagating in the space. Therefore, the person A hears, for example, a data signal of the speech voice of the person D transmitted to the laptop PC 2a and the direct voice DR14 of the speech voice of the person D, so that there is a problem that the person A is highly likely to hear the same content of the speech voice of the person D twice. The laptop PC 2d is installed with video and audio processing software for the remote web conference in an executable manner. The laptop PC 2d can communicate various data signals with the other laptop PCs 2a, 2b, and 2c via the network NW1 by using the video and audio processing software during the remote web conference. When the person D participates in the remote web conference in the office, the laptop PC 2d is connected to the earphones 1Ld and 1Rd worn by the person D such that an audio data signal can be input and output. Similarly to the laptop PCs 2a, 2b, and 2c, a hardware configuration of the laptop PC 2d is the same as a normal configuration of a so-called known laptop PC, including a processor, a memory, a hard disk, a communication interface, a built-in camera, and the like, and thus the description of the normal configuration will be omitted in the present description. The video and audio processing software executed by the laptop PC 2d is specifically implemented by processing based on cooperation of a processor and a memory included in the laptop PC 2d, and has a function of executing known signal processing on a video data signal acquired by a built-in camera of the laptop PC 2d and an audio data signal collected by speech microphones MCL1 and MCR1 of the earphones 1Ld and 1Rd, and transmitting the processed signals to the other laptop PCs (for example, the laptop PCs 2a, 2b, and 2c) via the network NW1.

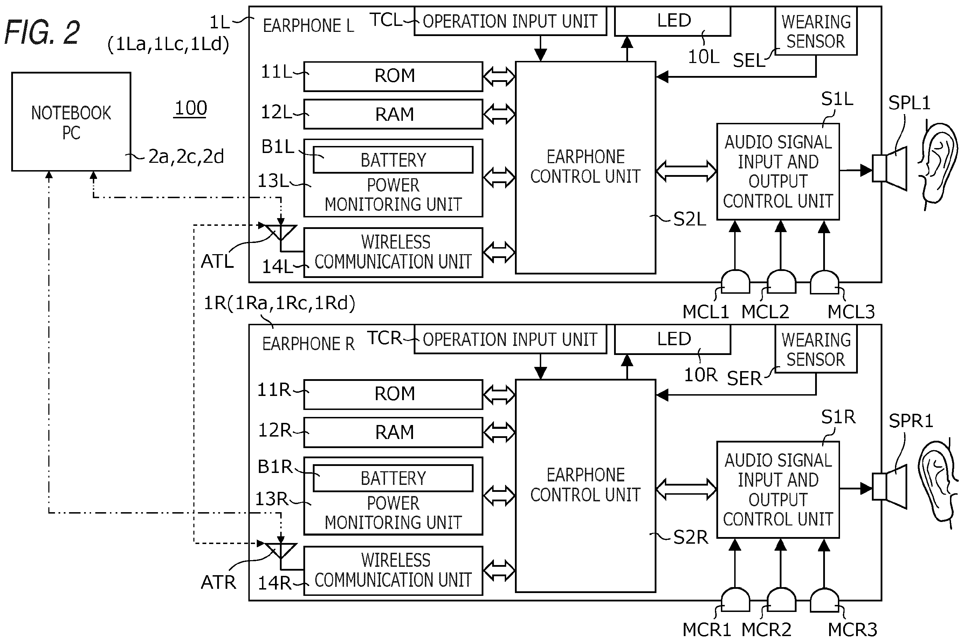

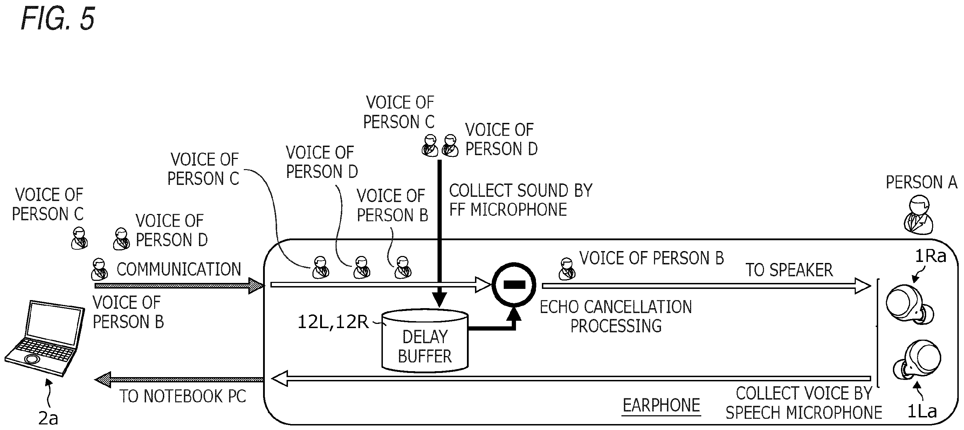

The earphones 1La and 1Ra are worn by the person A, and are connected to the laptop PC 2a in the first embodiment so as to enable audio data signal communication. In the first embodiment, at least the earphones 1La and 1Ra execute the echo cancellation processing (see Fig. 5) in order to solve the above problem, and output an audio data signal after the echo cancellation processing as audio. The connection between the earphones 1La and 1Ra and the laptop PC 2a may be a wired connection or a wireless connection, and the wireless connection will be shown below as an example. Specific hardware configuration examples and external appearance examples of the earphones 1La and 1Ra will be described later with reference to Figs. 2 to 4.

The earphones 1Lc and 1Rc are worn by the person C, and are connected to the laptop PC 2c in the first embodiment so as to enable audio data signal communication. In the first embodiment, the earphones 1Lc and 1Rc may execute the echo cancellation processing (see Fig. 5) in order to solve the above problem, and output an audio data signal after the echo cancellation processing or an audio data signal transmitted from the laptop PC 2c as audio. The connection between the earphones 1Lc and 1Rc and the laptop PC 2c may be a wired connection or a wireless connection, and the wireless connection will be shown below as an example. Specific hardware configuration examples and external appearance examples of the earphones 1Lc and 1Rc will be described later with reference to Figs. 2 to 4. In the first embodiment, the hardware configuration examples and the external appearance examples of the earphones 1Lc and 1Rc may not be the same as the hardware configuration examples and the external appearance examples of the earphones 1La and 1Ra, respectively, and may be the same as a configuration example and an external appearance example of an existing earphone.

The earphones 1Ld and 1Rd are worn by the person D, and are connected to the laptop PC 2d in the first embodiment so as to enable audio data signal communication. In the first embodiment, the earphones 1Ld and 1Rd may execute the echo cancellation processing (see Fig. 5) in order to solve the above problem, and output an audio data signal after the echo cancellation processing or an audio data signal transmitted from the laptop PC 2d as audio. The connection between the earphones 1Ld and 1Rd and the laptop PC 2d may be a wired connection or a wireless connection, and the wireless connection will be shown below as an example. Specific hardware configuration examples and external appearance examples of the earphones 1Ld and 1Rd will be described later with reference to Figs. 2 to 4. In the first embodiment, the hardware configuration examples and the external appearance examples of the earphones 1Ld and 1Rd may not be the same as the hardware configuration examples and the external appearance examples of the earphones 1La and 1Ra, respectively, and may be the same as a configuration example and an external appearance example of an existing earphone.

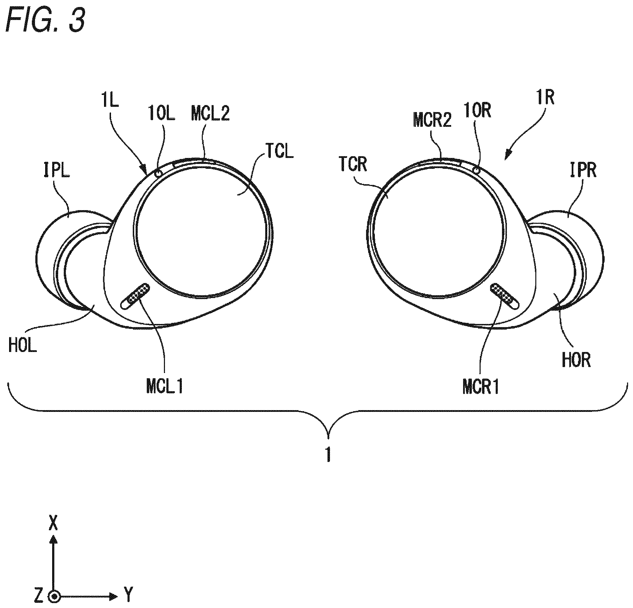

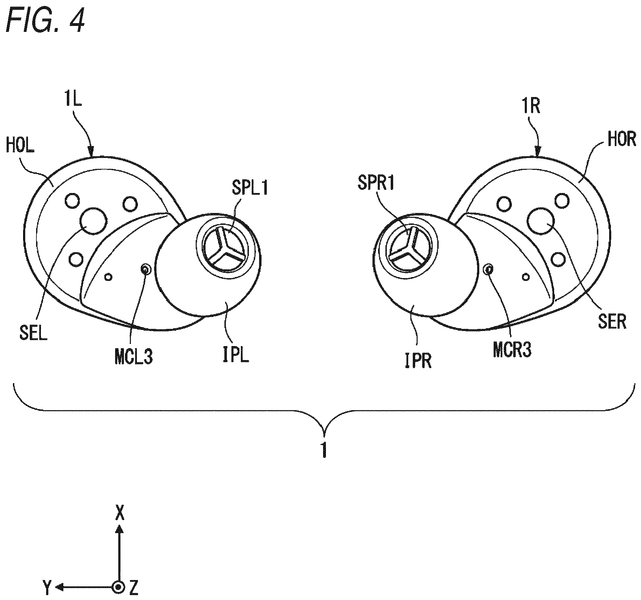

Next, hardware configuration examples and external appearance examples of earphones 1L and 1R will be described with reference to Figs. 2 to 4. Fig. 2 is a block diagram showing the hardware configuration examples of the left and right earphones 1L and 1R, respectively. Fig. 3 is a diagram showing external appearance examples when viewing front sides of operation input units TCL and TCR of the left and right earphones 1L and 1R, respectively. Fig. 4 is a diagram showing external appearance examples when viewing back sides of the operation input units TCL and TCR of the left and right earphones 1L and 1R, respectively.

For convenience of explanation, as shown in Fig. 3, an axis orthogonal to a surface of the operation input unit TCL of the earphone 1L is defined as a Z-axis. An axis perpendicular to the Z-axis (that is, parallel to the operation input unit TCL of the earphone 1L) and extending from the earphone 1L to the earphone 1R is defined as a Y-axis. An axis perpendicular to the Y-axis and the Z-axis is defined as an X-axis. In the present description, an orientation of the earphone 1L shown in Fig. 3 is defined as a front view. The expressions related to these directions are used for convenience of explanation, and are not intended to limit a posture of the structure in actual use.

In the present description, in a pair of left and right earphones 1L and 1R, the earphone 1L for a left ear and the earphone 1R for a right ear have the same configuration. The reference numerals of the same components are expressed by adding "L" at ends thereof in the earphone 1L for a left ear, and are expressed by adding "R" at ends thereof in the earphone 1R for a right ear. In the following description, only one left earphone 1L will be described, and the description of the other right earphone 1R will be omitted.

An earphone 1 includes the earphones 1L and 1R, which are to be worn on left and right ears of a user (for example, the person A, the person C, or the person D), respectively, and each of the earphones 1L and 1R is replaceablely attached with a plurality of earpieces having different sizes on one end side thereof. The earphone 1 includes the earphone 1L to be worn on the left ear of the user (for example, the person A, the person C, or the person D) and the earphone 1R to be worn on the right ear of the user (for example, the person A, the person C, or the person D), which can operate independently. In this case, the earphone 1L and the earphone 1R can communicate with each other wirelessly (for example, short-range wireless communication such as Bluetooth (registered trademark)). Alternatively, the earphone 1 may include a pair of earphones in which the earphone 1L and the earphone 1R are connected by a wire (in other words, a cable such as a wire).

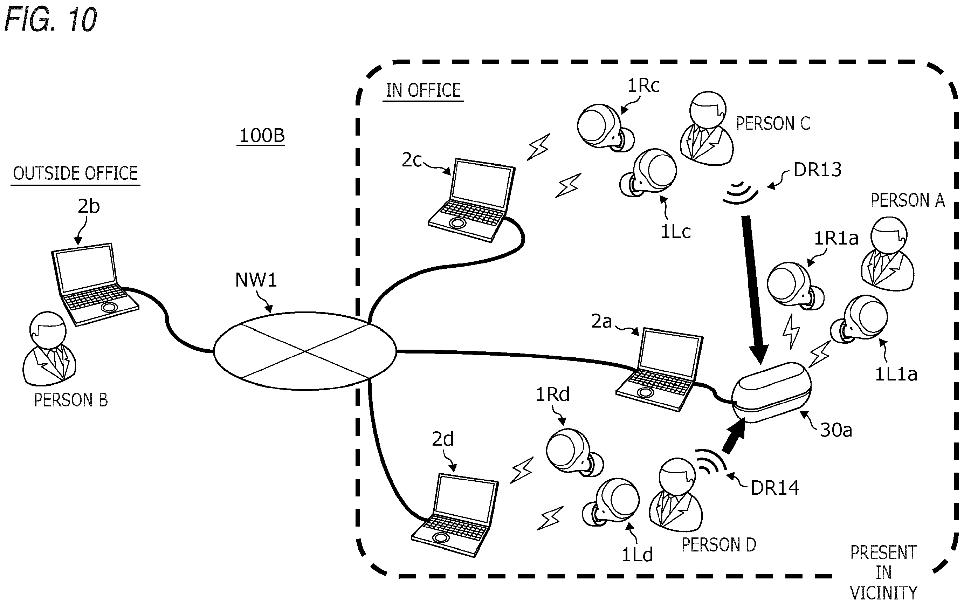

As shown in Fig. 3, the earphone 1L is an inner acoustic device used by being worn on the ear of the user (for example, the person A, the person C, or the person D), receives an audio data signal transmitted wirelessly (for example, short-range wireless communication such as Bluetooth (registered trademark)) from the laptop PC 2a used by the user, and outputs the received audio data signal as audio. The earphone 1L is placed on a charging case 30a (see Fig. 10 to be described later) when the earphone 1L is not in use. When the earphone 1L is placed at a predetermined placement position of the charging case 30a in a case where a battery B1L (see Fig. 2) built in the earphone 1L is not fully charged or the like, the battery B1L built in the earphone 1L is charged based on power transmitted from the charging case 30a.

The earphone 1L includes a housing HOL as a structural member thereof. The housing HOL is made of a composite of materials such as synthetic resin, metal, and ceramic, and has an accommodation space inside. The housing HOL is provided with an attachment cylindrical portion (not shown) communicating with the accommodation space.

The earphone 1L includes an earpiece IPL attached to a main body of the earphone 1L. For example, the earphone 1L is held in a state of being inserted into an ear canal through the earpiece IPL with respect to the left ear of the user (for example, the person A, the person C, or the person D), and this held state is a used state of the earphone 1L.

The earpiece IPL is made of a flexible member such as silicon, and is injection-molded with an inner tubular portion (not shown) and an outer tubular portion (not shown). The earpiece IPL is fixed by being inserted into the attachment cylindrical portion (not shown) of the housing HOL at the inner tubular portion thereof, and is replaceable (detachable) with respect to the attachment cylindrical portion of the housing HOL. The earpiece IPL is worn on the ear canal of the user (for example, the person A, the person C, or the person D) with the outer tubular portion thereof, and is elastically deformed according to a shape of an ear canal on which the earpiece IPL is to be worn. Due to this elastic deformation, the earpiece IPL is held in the ear canal of the user (for example, the person A, the person C, or the person D). The earpiece IPL has a plurality of different sizes. As for the earpiece IPL, an earpiece of any size among a plurality of earpieces of different sizes is attached to the earphone 1L and worn on the left ear of the user (for example, the person A, the person C, or the person D).

As shown in Fig. 3, the operation input unit TCL is provided on the other end side opposite to the one end side of the housing HOL on which the earpiece IPL is disposed. The operation input unit TCL is a sensor element having a function of detecting an input operation (for example, a touch operation) of the user (for example, the person A, the person C, or the person D). The sensor element is, for example, an electrode of a capacitive operation input unit. The operation input unit TCL may be formed as, for example, a circular surface, or may be formed as, for example, an elliptical surface. The operation input unit TCL may be formed as a rectangular surface.

Examples of the touch operation performed on the operation input unit TCL by a finger or the like of the user (for example, the person A, the person C, or the person D) include the following operations. When a touch operation for a short time is performed, the earphone 1L may instruct an external device to perform any one of playing music, stopping music, skipping forward, skipping back, or the like. When a touch operation for a long time (a so-called long-press touch) is performed, the earphone 1L may perform a pairing operation or the like for performing wireless communication such as Bluetooth (registered trademark) with the laptop PC 2a. When a front surface of the operation input unit TCL is traced with a finger (a so-called swiping operation is performed), the earphone 1L may perform, for example, volume adjustment of music being played.

A light emission diode (LED) 10L is disposed at a position on one end side of a housing body of the earphone 1L corresponding to an operation surface-shaped end portion (for example, an upper end portion of an operation surface along an +X direction) of the operation input unit TCL exposed on the housing HOL. The LED 10L is used, for example, when the laptop PC 2a, 2c, or 2d owned by the user (for example, the person A, the person C, or the person D) and the earphone 1L are associated with each other on a one-to-one basis (hereinafter referred to as "pairing") by wirelessly communicating with the laptop PC 2a, 2c, or 2d. The LED 10L represents operations such as lighting up when the pairing is completed, blinking in a single color, and blinking in different colors. A use and an operation method of the LED 10L are examples, and the present invention is not limited thereto.

The earphone 1L includes a plurality of microphones (a speech microphone MCL1, a feed forward (FF) microphone MCL2, and a feed back (FB) microphone MCL3) as electric and electronic members. The plurality of microphones are accommodated in the accommodation space (not shown) of the housing HOL.

As shown in Fig. 3, the speech microphone MCL1 is disposed on the housing HOL so as to be capable of collecting an audio signal based on a speech of the user (for example, the person A, the person C, or the person D) wearing the earphone 1L. The speech microphone MCL1 is implemented by a microphone device capable of collecting a voice (that is, detecting an audio signal) generated based on the speech of the user (for example, the person A, the person C, or the person D). The speech microphone MCL1 collects the voice generated based on the speech of the user (for example, the person A, the person C, or the person D), converts the voice into an electric signal, and transmits the electric signal to an audio signal input and output control unit S1L. The speech microphone MCL1 is disposed such that an extending direction of the earphone 1L faces a mouth of the user (for example, the person A, the person C, or the person D) when the earphone 1L is inserted into the left ear of the user (for example, the person A, the person C, or the person D) (see Fig. 3), and is disposed at a position below the operation input unit TCL (that is, in a -X direction). The voice spoken by the user (for example, the person A, the person C, or the person D) is collected by the speech microphone MCL1 and converted into an electric signal, and the presence or absence of the speech of the user (for example, the person A, the person C, or the person D) by the speech microphone MCL1 can be detected according to a magnitude of the electric signal.

As shown in Fig. 3, the FF microphone MCL2 is provided on the housing HOL, and is disposed so as to be capable of collecting an ambient sound or the like outside the earphone 1L. That is, the FF microphone MCL2 can detect the ambient sound of the user (for example, the person A, the person C, or the person D) in a state where the earphone 1L is worn on the ear of the user (for example, the person A, the person C, or the person D). The FF microphone MCL2 converts the external ambient sound into an electric signal (an audio signal) and transmits the electric signal to the audio signal input and output control unit S1L.

As shown in Fig. 4, the FB microphone MCL3 is disposed on a surface near the attachment cylindrical portion (not shown) of the housing HOL, and is disposed as close as possible to the ear canal of the left ear of the user (for example, the person A, the person C, or the person D). The FB microphone MCL3 converts a sound leaked from between the ear of the user (for example, the person A, the person C, or the person D) and the earpiece IPL in a state where the earphone 1L is worn on the ear of the user (for example, the person A, the person C, or the person D) into an electric signal (an audio signal) and transmits the electric signal to the audio signal input and output control unit S1L.

As shown in Fig. 4, a speaker SPL1 is disposed in the attachment cylindrical portion (not shown) of the housing HOL. The speaker SPL1 is an electronic component, and outputs, as audio, an audio data signal wirelessly transmitted from the laptop PC 2a, 2c, or 2d. In the housing HOL, a front surface (in other words, an audio output surface) of the speaker SPL1 is directed toward an attachment cylindrical portion (not shown) side of the housing HOL covered with the earpiece IPL. Accordingly, the audio data signal output as audio from the speaker SPL1 is further transmitted from an ear hole (for example, an external ear portion) to an internal ear and an eardrum of the user (for example, the person A, the person C, or the person D), and the user (for example, the person A, the person C, or the person D) can listen to the audio of the audio data signal.

A wearing sensor SEL is implemented by a device that detects whether the earphone 1L is worn on the left ear of the user (for example, the person A, the person C, or the person D) and is implemented by, for example, an infrared sensor or an electrostatic sensor. In a case of an infrared sensor, if the earphone 1L is worn on the left ear of the user (for example, the person A, the person C, or the person D), the wearing sensor SEL can detect the wearing of the earphone 1L on the left ear of the user (for example, the person A, the person C, or the person D) by receiving infrared rays emitted from the wearing sensor SEL and reflected inside the left ear. If the earphone 1L is not worn on the left ear of the user (for example, the person A, the person C, or the person D), the wearing sensor SEL can detect that the earphone 1L is not worn on the left ear of the user (for example, the person A, the person C, or the person D) by not receiving infrared rays as the infrared rays emitted from the wearing sensor SEL are not reflected. On the other hand, in a case of an electrostatic sensor, if the earphone 1L is worn on the left ear of the user (for example, the person A, the person C, or the person D), the wearing sensor SEL can detect the wearing of the earphone 1L on the left ear of the user (for example, the person A, the person C, or the person D) by determining that a change value of an electrostatic capacitance according to a distance from the earphone 1L to an inside of the left ear of the user (for example, the person A, the person C, or the person D) is greater than a threshold held by the wearing sensor SEL. If the earphone 1L is not worn on the left ear of the user (for example, the person A, the person C, or the person D), the wearing sensor SEL can detect that the earphone 1L is not worn on the left ear of the user (for example, the person A, the person C, or the person D) by determining that the change value of the electrostatic capacitance is smaller than the threshold held by the wearing sensor SEL. The wearing sensor SEL is provided at a position facing the ear canal when the earphone 1L is inserted into the left ear of the user (for example, the person A, the person C, or the person D) and on a back side of the operation input unit TCL.

In the description of the block diagram of Fig. 2, similarly to Figs. 3 and 4, a configuration of the earphone 1L in the pair of left and right earphones 1L and 1R will be described, and a configuration of the earphone 1R is the same as the configuration of the earphone 1L. Therefore, the description of the earphone 1R is also omitted in Fig. 2.

The operation input unit TCL is communicably connected to an earphone control unit S2L. The operation input unit TCL outputs a signal related to the touch operation performed by the user (for example, the person A, the person C, or the person D) to the earphone control unit S2L.

The wearing sensor SEL is communicably connected to the earphone control unit S2L, and outputs, to the earphone control unit S2L, a signal indicating whether the ear of the user (for example, the person A, the person C, or the person D) is in contact with the earphone 1L.

A power monitoring unit 13L is implemented by, for example, a semi-conductor chip. The power monitoring unit 13L includes the battery B 1L and measures a remaining charge amount of the battery B 1L. The battery B1L is, for example, a lithium ion battery. The power monitoring unit 13L outputs information related to the measured remaining charge amount of the battery B1L to the earphone control unit S2L.

The audio signal input and output control unit S1L is implemented by, for example, a processor such as a central processing unit (CPU), a micro processing unit (MPU), or a digital signal processor (DSP). The audio signal input and output control unit S1L is communicably connected to the earphone control unit S2L, and exchanges an audio data signal as a digital signal converted into a digital format by a pulse code modulation (PCM) method. The audio signal input and output control unit S1L converts an audio data signal acquired from the laptop PC 2a, 2c, or 2d into an analog signal, adjusts a volume level, and outputs the analog signal from the speaker SPL1.

The audio signal input and output control unit S1L is connected to the speech microphone MCL1, the FF microphone MCL2, and the FB microphone MCL3, and receives an audio data signal collected by each of the speech microphone MCL1, the FF microphone MCL2, and the FB microphone MCL3. The audio signal input and output control unit S1L may be capable of executing processing such as amplifying the audio data signal input from each of the speech microphone MCL1, the FF microphone MCL2, and the FB microphone MCL3 and converting an analog signal into a digital signal. The audio signal input and output control unit S1L transmits the audio data signal input from each of the speech microphone MCL1, the FF microphone MCL2, and the FB microphone MCL3 to the earphone control unit S2L.

The earphone control unit S2L is implemented by, for example, a processor such as a CPU, an MPU, or a DSP, is communicably connected to the audio signal input and output control unit S1L, a read only memory (ROM) 11L, a random access memory (RAM) 12L, the power monitoring unit 13L, and a wireless communication unit 14L, and exchanges an audio data signal as a digital signal converted into a digital format by a PCM method. The earphone control unit S2L functions as a controller that controls the overall operation of the earphone 1L, and executes control processing for integrally controlling operations of the units of the earphone 1L, data input and output processing with the units of the earphone 1L, data arithmetic processing, and data storage processing.

The earphone control unit S2L causes the LED 10L to light up, blink, or the like when acquiring a signal input from the operation input unit TCL. For example, the LED 10L blinks in a single color or alternately in different colors when the pairing is performed with the laptop PC 2a, 2c, or 2d via wireless communication such as Bluetooth (registered trademark) from the earphone control unit S2L. This operation is an example, and the operation of the LED 10L is not limited thereto. The earphone control unit S2L may acquire the information related to the remaining charge amount of the battery B1L from the power monitoring unit 13L, and may cause the LED 10L to light up or blink according to the remaining charge amount of the battery B1L.

The earphone control unit S2L (an example of a signal processing unit) holds an audio data signal (see Fig. 5) which is audio-processed data of the other user speech voice transmitted from the laptop PC 2a, 2c, or 2d, and audio data signals (an example of collected audio data) of the direct voice DR13 of the person C and the direct voice DR14 of the person D temporarily accumulated in the RAM 12 as a buffer. Further, the earphone control unit S2L executes cancellation processing (for example, the echo cancellation processing) for canceling a component of a speech voice of another user (for example, the person C or the person D) included in the audio-processed data of the other user speech voice. Details of the echo cancellation processing will be described later with reference to Fig. 5. The earphone control unit S2L outputs, as audio, the audio data signal after the cancellation processing from the speaker SPL1 via the audio signal input and output control unit S 1L.

The audio signal input and output control unit S 1L and the earphone control unit S2L implement respective functions by using programs and data stored in the read only memory (ROM) 11L. The audio signal input and output control unit S1L and the earphone control unit S2L may use the RAM 12L during operation and temporarily store generated or acquired data or information in the RAM 12L. For example, the earphone control unit S2L temporarily accumulates (stores), in the RAM 12 as collected audio data, an audio data signal of the speech voice of the other user (for example, the person C or the person D) collected by the FF microphone MCL2.

The wireless communication unit 14L establishes a wireless connection between the earphone 1L and the laptop PC 2a, 2c, or 2d, between the earphone 1L and the earphone 1R, and between the earphone 1L (for example, the earphone 1La or 1Ra) and another earphone 1L (for example, the earphone 1Lc or 1Ld) so as to enable audio data signal communication. The wireless communication unit 14L transmits an audio data signal processed by the audio signal input and output control unit S1L or the earphone control unit S2L to the laptop PC 2a, 2c, or 2d. The wireless communication unit 14L includes an antenna ATL and performs short-range wireless communication according to, for example, a communication standard of Bluetooth (registered trademark). The wireless communication unit 14L may be provided in a manner connectable to a communication line such as Wi-Fi (registered trademark), a mobile communication line, or the like.

### <Outline of Operation>

Next, an operation outline example of the conference system 100 according to the first embodiment will be described with reference to Fig. 5. Fig. 5 is a diagram schematically showing the operation outline example of the conference system 100 according to the first embodiment. In the example of Fig. 5, as described with reference to Fig. 1, a situation in which the person A is the specific person, and the direct voices DR13 and DR14 of the speech voices of the person C and the person D who are located near the person A during the remote web conference propagate to the ear of the person A will be described as an example.

However, the following description is similarly applicable to a situation in which the person C (or the person D) other than the person A is the specific person, and direct voices of speech voices of the person D and the person A (or the person A and the person C) who are located near the person C (or the person D) during the remote web conference propagate to an ear of the person C (or the person D).

As described above, the person B participates in the remote web conference outside the office by connecting the laptop PC 2b to the network NW 1. Therefore, an audio data signal of a speech voice of the person B during the remote web conference is received by the laptop PC 2a of the person A from the laptop PC 2b via the network NW1.

On the other hand, the person C and the person D participate in the remote web conference in a state of being located near the person A. The audio data signal of the speech voice of the person C during the remote web conference is collected by the earphones 1Lc and 1Rc, transmitted to the laptop PC 2c, and then received by the laptop PC 2a of the person A from the laptop PC 2c via the network NW1. Similarly, the audio data signal of the speech voice of the person D during the remote web conference is collected by the earphones 1Ld and 1Rd, transmitted to the laptop PC 2d, and then received by the laptop PC 2a of the person A from the laptop PC 2d via the network NW1. Further, the earphones 1La and 1Ra of the person A respectively collect, by the FF microphones MCL2 and MCR2, the direct voice DR13 of the speech voice of the person C and the direct voice DR14 of the speech voice of the person D who are located near the person A. The earphone control units S2L and S2R of the earphones 1La and 1Ra temporarily accumulate (store) an audio data signal of the collected direct voice DR13 and an audio data signal of the collected direct voice DR14 in the RAMs 12L and 12R (examples of a delay buffer) as collected audio data, respectively.

The earphone control units S2L and S2R of the earphones 1La and 1Ra use the audio data signals transmitted from the laptop PC 2a (that is, the audio-processed data of the other user speech voice transmitted from the laptop PCs 2b, 2c, and 2d to the laptop PC 2a via the network NW1 during the remote web conference) and the collected audio data temporarily accumulated in the RAMs 12L and 12R to execute the echo cancellation processing using the collected audio data as a reference signal. More specifically, the earphone control units S2L and S2R execute the echo cancellation processing for canceling a component of the reference signal included in the audio-processed data of the other user speech voice (the audio data signal of the speech voice of the person B, the audio data signal of the speech voice of the person C, and the audio data signal of the speech voice of the person D) transmitted via the video and audio processing software installed in the laptop PCs 2b, 2c, and 2d and the network NW1.

Accordingly, the earphone control units S2L and S2R can cancel (delete) respective components of the speech voice of the person C and the speech voice of the person D included in the audio-processed data of the other user speech voice (the audio data signal of the speech voice of the person B, the audio data signal of the speech voice of the person C, and the audio data signal of the speech voice of the person D) transmitted from the laptop PCs 2b, 2c, and 2d via the network NW1, and can output, as audio, the audio data signal of the speech voice of the person B from the speakers SPL1 and SPR1. In addition, during the remote web conference, the person A can listen to the speech voice of the person C based on the direct voice DR13, and similarly, can listen to the speech voice of the person D based on the direct voice DR14.

Although the detailed description is omitted, when the specific person is the person C (or the person D), the earphones 1La and 1Ra collect, by the speech microphones MCL1 and MCR1, an audio data signal of a speech voice spoken by the person A during the remote web conference, and transmit and distribute the collected audio data signal to the other laptop PCs (for example, the laptop PCs 2b, 2c, and 2d) via the laptop PC 2a and the network NW1.

### <Operation Procedure>

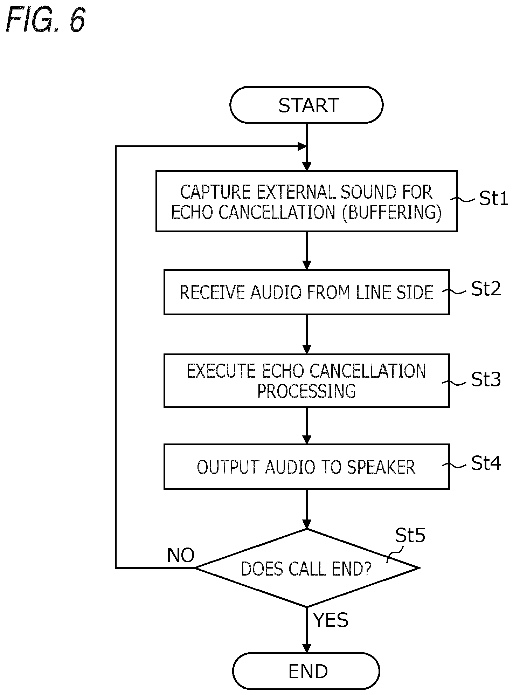

Next, an operation procedure example of the earphones 1La and 1Ra of the person A in the conference system 100 according to the first embodiment will be described with reference to Fig. 6. Fig. 6 is a flowchart showing the operation procedure example of the earphones 1La and 1Ra according to the first embodiment in time series. The processing shown in Fig. 6 is mainly executed by the earphone control units S2L and S2R of the earphones 1La and 1Ra. In the description of Fig. 6, similarly to the example of Fig. 5, a situation in which the person A is the specific person, and the direct voices DR13 and DR14 of the speech voices of the person C and the person D who are located near the person A during the remote web conference propagate to the ear of the person A will be described as an example.

However, the following description is similarly applicable to a situation in which the person C (or the person D) other than the person A is the specific person, and direct voices of speech voices of the person D and the person A (or the person A and the person C) who are located near the person C (or the person D) during the remote web conference propagate to an ear of the person C (or the person D).

In Fig. 6, the earphones 1La and 1Ra collect sounds by the FF microphones MCL2 and MCR2 in order to capture an external sound (for example, the direct voice DR13 of the speech voice of the person C during the remote web conference and the direct voice DR14 of the speech voice of the person D during the remote web conference) for the echo cancellation processing in step St3 (step St1). The earphone control units S2L and S2R temporarily accumulate (store) the audio data signal of the collected direct voice DR13 and the audio data signal of the collected direct voice DR14 in the RAMs 12L and 12R (the examples of the delay buffer) as the collected audio data, respectively (step St1).

The earphone control units S2L and S2R receive and acquire the audio data signals (that is, the audio-processed data of the other user speech voice transmitted from the laptop PCs 2b, 2c, and 2d to the laptop PC 2a via the network NW 1 during the remote web conference) transmitted from a line side (in other words, the network NW 1 and the laptop PC 2a) (step St2). That is, the earphone control units S2L and S2R acquire the audio-processed data of the other user speech voice (the audio data signal of the speech voice of the person B, the audio data signal of the speech voice of the person C, and the audio data signal of the speech voice of the person D) transmitted via the video and audio processing software installed in the laptop PCs 2b, 2c, and 2d and the network NW1.

The earphone control units S2L and S2R execute the echo cancellation processing for canceling the collected audio data temporarily accumulated in step St1 as a component of a reference signal from the audio-processed data of the other user speech voice (the audio data signal of the speech voice of the person B, the audio data signal of the speech voice of the person C, and the audio data signal of the speech voice of the person D) acquired in step St2 (step St3). The processing itself in step St3 is a known technique, and thus the detailed description thereof will be omitted, but in order to effectively cancel the component of the collected audio data (the direct voices DR13 and DR14) included in the audio-processed data of the other user speech voice, for example, the earphone control units S2L and S2R execute the echo cancellation processing so as to cancel the component from the audio-processed data of the other user speech voice after executing delay processing for a certain time on the collected audio data (the direct voices DR13 and DR14). Accordingly, the earphone control units S2L and S2R can execute the echo cancellation processing with high accuracy on the component of the reference signal (for example, the direct voice DR13 based on the speech of the person C and the direct voice DR14 based on the speech of the person D) included in the audio-processed data of the other user speech voice, and can clearly output the audio data signal of the speech voice of the person B, who is not located near the person A, from the speakers SPL1 and SPR1, thereby supporting improvement of the easiness of hearing of the person A.

The earphone control units S2L and S2R output, as audio, an audio data signal after the echo cancellation processing in step St3 (that is, the audio data signal of the speech voice of the person B obtained by canceling the audio data signal of the speech voice of the person C and the audio data signal of the speech voice of the person D) from the speakers SPL1 and SPR1 (step St4). After step St4, when a call ends (that is, the remote web conference ends) (step St5: YES), the processing of the earphones 1La and 1Ra shown in Fig. 6 ends.

On the other hand, after step St4, when the call does not end (that is, the remote web conference continues) (step St5: NO), the earphones 1La and 1Ra continuously repeat a series of processing from step St1 to step St4 until the call ends.

As described above, in the conference system 100 according to the first embodiment, the earphone 1L (for example, the earphones 1La and 1Ra of the person A) is worn by the user (for example, the person A), and includes a communication interface (the wireless communication units 14L and 14R) capable of performing data communication with an own user terminal (the laptop PC 2a) communicably connected to at least one another user terminal (the laptop PC 2b, 2c, or 2d) via the network NW1, a first microphone (the FF microphones MCL2 and MCR2) configured to collect a speech voice of at least one another user (for example, the person C or the person D) located near the user during the conference, the buffer (the RAMs 12L and 12R) configured to accumulate collected audio data of the speech voice of the other user, which is collected by the first microphone, and the signal processing unit (the earphone control units S2L and S2R) configured to execute, by using audio-processed data (that is, an audio data signal subjected to predetermined signal processing by the video and audio processing software of the laptop PC 2b, 2c, or 2d) of the other user speech voice (for example, the person B, the person C, or the person D) transmitted from the other user terminal to the own user terminal via the network NW 1 during the conference and the collected audio data accumulated in the buffer, the cancellation processing (the echo cancellation processing) for canceling a component of the speech voice of the other user included in the audio-processed data. Accordingly, in a conference (for example, the remote web conference) or the like in which a commuting participant (for example, the person A, the person C, and the person D) and a telecommuting participant (for example, the person B) are mixed, the earphones 1La and 1Ra directly collect the direct voices DR13 and DR14 of the speech voices of the person C and the person D who are the other users located near a listener (for example, the person A who is located near the person C and the person D) and use the direct voices DR13 and DR14 for the echo cancellation processing, and thus it is possible to efficiently prevent an omission in listening to a speech content of a user (for example, the person B, the person C, or the person D) other than the person A, and to support smooth progress of the conference or the like.

The signal processing unit (the earphone control units S2L and S2R) executes the delay processing for a certain time on the collected audio data (the respective audio data signals of the direct voices DR13 and DR14 of the speech voices of the person C and the person D collected by the FF microphones MCL2 and MCR2). The signal processing unit executes the cancellation processing (the echo cancellation processing) by using the audio-processed data (that is, the audio data signal subjected to the predetermined signal processing by the video and audio processing software of the laptop PC 2b, 2c, or 2d) of the other user speech voice (for example, the person B, the person C, or the person D) transmitted from the other user terminal (the laptop PC 2b, 2c, or 2d) to the own user terminal (the laptop PC 2a) via the network NW1 during the conference and the collected audio data after the delay processing. Accordingly, the earphones 1La and 1Ra can cancel (delete) the respective components of the speech voice of the person C and the speech voice of the person D included in the audio-processed data of the other user speech voice (the audio data signal of the speech voice of the person B, the audio data signal of the speech voice of the person C, and the audio data signal of the speech voice of the person D) transmitted from the laptop PCs 2b, 2c, and 2d via the network NW1.

The certain time is an average time required for the communication interface (the wireless communication units 14L and 14R) to receive the audio-processed data from the other user terminal (the laptop PC 2b, 2c, or 2d) via the network NW1 and the own user terminal (the laptop PC 2a). The certain time is stored in the ROMs 11L and 11R or the RAMs 12L and 12R of the earphones 1La and 1Ra. Accordingly, the earphones 1La and 1Ra can execute the echo cancellation processing with high accuracy on the component of the reference signal (for example, the direct voice DR13 based on the speech of the person C and the direct voice DR14 based on the speech of the person D) included in the audio-processed data of the other user speech voice, and can clearly output the audio data signal of the speech voice of the person B, who is not located near the person A, from the speakers SPL1 and SPR1, thereby supporting the improvement of the easiness of hearing of the person A.

The earphones 1La and 1Ra further include the respective speakers SPL1 and SPR1 configured to output the audio-processed data after the cancellation processing. Accordingly, the earphones 1La and 1Ra can prevent an influence of the direct voices DR13 and DR14 of the speech voices of the person C and the person D who are located near the person A, and can output the audio data signal of the speech voice of the person B as audio.

### (Second Embodiment)

In the first embodiment, the direct voice DR13 of the speech voice of the person C who is another user located near the person A and the direct voice DR14 of the speech voice of the person D who is another user located near the person A are collected by the earphones 1La and 1Ra of the person A. Accordingly, as the reference signal used for the echo cancellation processing, the audio data signal of the direct voice DR13 of the speech voice of the person C and the audio data signal of the direct voice DR14 of the speech voice of the person D are used in the earphones 1La and 1Ra.

In a second embodiment, the person A, the person C, and the person D respectively wear the earphones 1La and 1Ra, 1Lc and 1Rc, and 1Ld and 1Rd having the same configuration, and the earphones are connected so as to be able to wirelessly communicate audio data signals with each other. Further, an example will be described in which, as a reference signal used for echo cancellation processing, an audio data signal of a speech voice of the person C collected by the earphones 1Lc and 1Rc and an audio data signal of a speech voice of the person D collected by the earphones 1Ld and 1Rd are wirelessly transmitted to be used in the earphones 1La and 1Ra.

### <System Configuration>

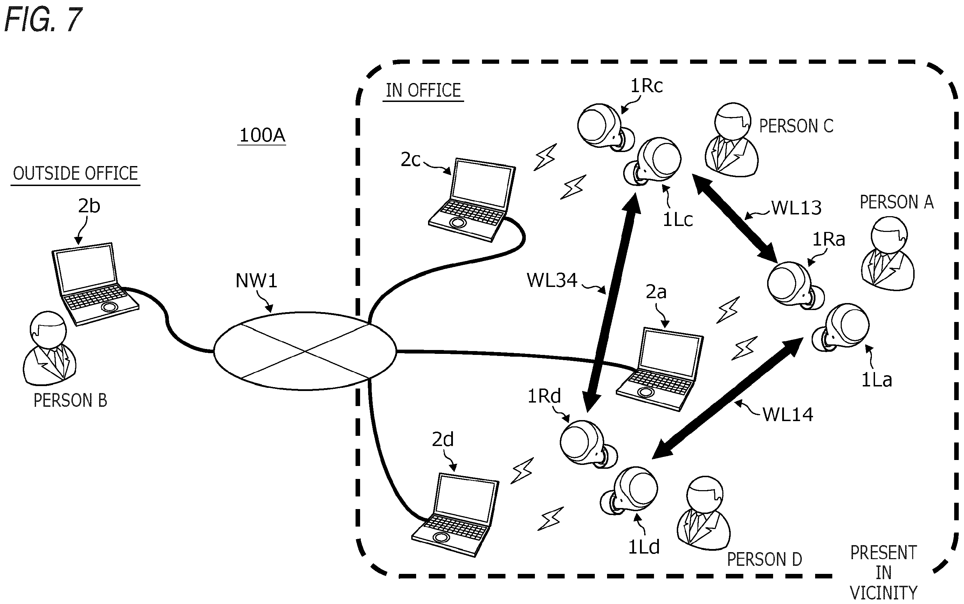

First, a system configuration example of a conference system 100A according to the second embodiment will be described with reference to Fig. 7. Fig. 7 is a diagram showing the system configuration example of the conference system 100A according to the second embodiment. Similarly to the conference system 100 according to the first embodiment, the conference system 100A includes at least the laptop PCs 2a, 2b, 2c, and 2d and the earphones 1La, 1Ra, 1Lc, 1Rc, 1Ld, and 1Rd. In the description of a configuration of the conference system 100A according to the second embodiment, the same configurations as those of the conference system 100 according to the first embodiment are denoted by the same reference numerals, and the description thereof will be simplified or omitted, and different contents will be described.

In the second embodiment, unlike the first embodiment, it is assumed that hardware configuration examples and external appearance examples of the earphones 1La and 1Ra of the person A, the earphones 1Lc and 1Rc of the person C, and the earphones 1Ld and 1Rd of the person D are the same.

The earphones 1La and 1Ra of the person A establish wireless connections WL13 and WL14 with the other earphones (that is, the earphones 1Lc and 1Rc of the person C and the earphones 1Ld and 1Rd of the person D) to perform wireless communication of audio data signals. The wireless connections WL13 and WL14 may be, for example, Bluetooth (registered trademark), Wi-Fi (registered trademark), or digital enhanced cordless telecommunications (DECT).

The earphones 1Lc and 1Rc of the person C establish the wireless connections WL13 and WL34 with the other earphones (that is, the earphones 1La and 1Ra of the person A and the earphones 1Ld and 1Rd of the person D) to perform wireless communication of audio data signals. The wireless connections WL13 and WL34 may be, for example, Bluetooth (registered trademark), Wi-Fi (registered trademark), or DECT.

The earphones 1Ld and 1Rd of the person D establish the wireless connections WL14 and WL34 with the other earphones (that is, the earphones 1La and 1Ra of the person A and the earphones 1Lc and 1Rc of the person C) to perform wireless communication of audio data signals. The wireless connections WL14 and WL34 may be, for example, Bluetooth (registered trademark), Wi-Fi (registered trademark), or DECT.

### <Outline of Operation>

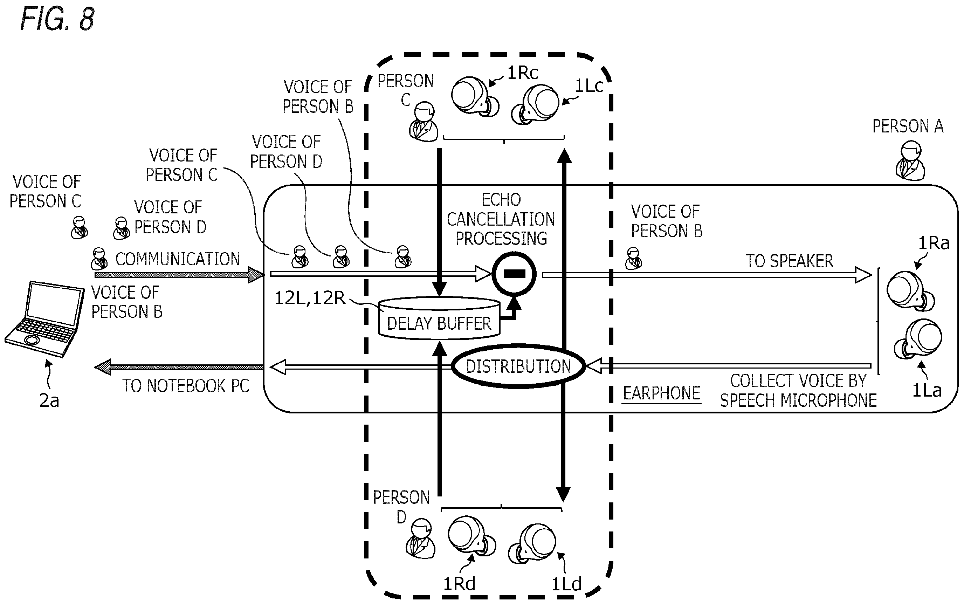

Next, an operation outline example of the conference system 100A according to the second embodiment will be described with reference to Fig. 8. Fig. 8 is a diagram schematically showing the operation outline example of the conference system 100Aaccording to the second embodiment. In the example of Fig. 8, as described with reference to Fig. 1, a situation in which the person A is a specific person, and the audio data signals obtained by collecting the speech voices of the person C and the person D who are located near the person A during a remote web conference are wirelessly transmitted from the earphones 1Lc, 1Rc, 1Ld, and 1Rd to the earphones 1La and 1Ra of the person A will be described as an example. The description of contents redundant with the description of Fig. 5 will be simplified or omitted, and different contents will be described.

However, the following description is similarly applicable to a situation in which the person C (or the person D) other than the person A is the specific person, and the audio data signals obtained by collecting the speech voices of the person D and the person A (or the person A and the person C) who are located near the person C (or the person D) during the remote web conference are wirelessly transmitted to the earphone of the person C (or the person D).

The person C and the person D participate in the remote web conference in a state of being located near the person A. The audio data signal of the speech voice of the person C during the remote web conference is collected by the earphones 1Lc and 1Rc, wirelessly transmitted to the earphones 1La and 1Ra via the wireless connection WL 13 and transmitted to the laptop PC 2c, and then received by the laptop PC 2a of the person A from the laptop PC 2c via the network NW1. Similarly, the audio data signal of the speech voice of the person D during the remote web conference is collected by the earphones 1Ld and 1Rd, wirelessly transmitted to the earphones 1La and 1Ra via the wireless connection WL14 and transmitted to the laptop PC 2d, and then received by the laptop PC 2a of the person A from the laptop PC 2d via the network NW1. Further, the earphone control units S2L and S2R of the earphones 1La and 1Ra temporarily accumulate (store), in the RAMs 12L and 12R (the examples of the delay buffer) as collected audio data, the audio data signal of the speech voice of the person C wirelessly transmitted from the earphones 1Lc and 1Rc and the audio data signal of the speech voice of the person D wirelessly transmitted from the earphones 1Ld and 1Rd, respectively.

The earphone control units S2L and S2R of the earphones 1La and 1Ra use the audio data signals transmitted from the laptop PC 2a (that is, the audio-processed data of the other user speech voice transmitted from the laptop PCs 2b, 2c, and 2d to the laptop PC 2a via the network NW1 during the remote web conference) and the collected audio data temporarily accumulated in the RAMs 12L and 12R to execute the echo cancellation processing using the collected audio data as a reference signal. More specifically, the earphone control units S2L and S2R execute the echo cancellation processing for canceling a component of the reference signal included in the audio-processed data of the other user speech voice (the audio data signal of the speech voice of the person B, the audio data signal of the speech voice of the person C, and the audio data signal of the speech voice of the person D) transmitted via the video and audio processing software installed in the laptop PCs 2b, 2c, and 2d and the network NW1.

Accordingly, the earphone control units S2L and S2R can cancel (delete) respective components of the speech voice of the person C and the speech voice of the person D included in the audio-processed data of the other user speech voice (the audio data signal of the speech voice of the person B, the audio data signal of the speech voice of the person C, and the audio data signal of the speech voice of the person D) transmitted from the laptop PCs 2b, 2c, and 2d via the network NW1, and can output, as audio, the audio data signal of the speech voice of the person B from the speakers SPL1 and SPR1.

Although the detailed description is omitted, when the specific person is the person C (or the person D), the earphones 1La and 1Ra collect, by the speech microphones MCL1 and MCR1, an audio data signal of a speech voice spoken by the person A during the remote web conference, and transmit and distribute the collected audio data signal to the other laptop PCs (for example, the laptop PCs 2b, 2c, and 2d) via the laptop PC 2a and the network NW1, and further directly transmit the audio data of the speech voice of the person A to the earphones 1Lc, 1Rc, 1Ld, and 1Rd by wireless transmission.

### <Operation Procedure>

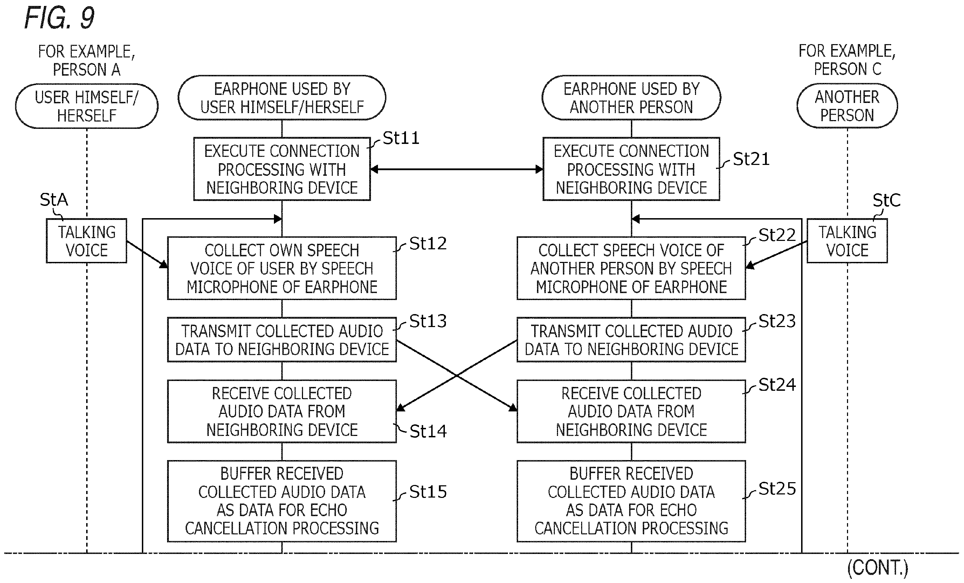

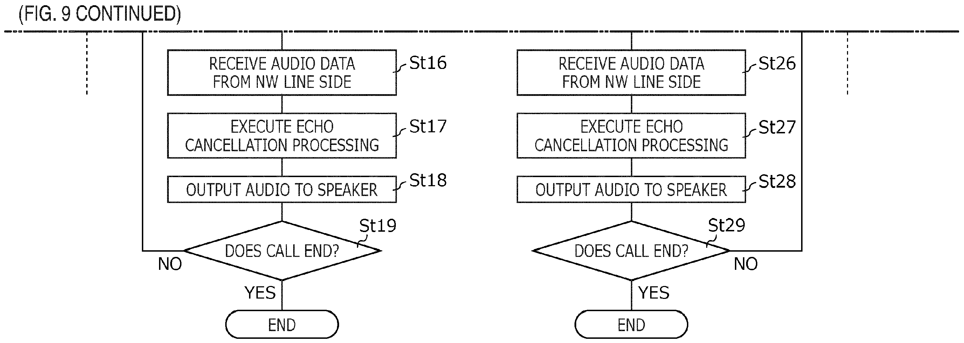

Next, an operation procedure example of the earphones 1La and 1Ra of the person A and the earphones 1Lc and 1Rc of another user (for example, the person C) in the conference system 100A according to the second embodiment will be described with reference to Fig. 9. Fig. 9 is a sequence diagram showing the operation procedure example of the conference system 100A according to the second embodiment in time series. The processing shown in Fig. 9 is mainly executed by the earphone control units S2L and S2R of the earphones 1La and 1Ra and the earphone control units S2L and S2R of the earphones 1Lc and 1Rc. In the description of Fig. 9, a situation in which the person A is the specific person, and the audio data signal of the speech voice of the person C located near the person A during the remote web conference is wirelessly transmitted to the earphones 1La and 1Ra via the wireless connection WL13 will be described as an example. In the description of Fig. 9, the person C may be replaced with the person D and the earphones 1Lc and 1Rc may be replaced with the earphones 1Ld and 1Rd, or the person C may be replaced with the person C and the person D and the earphones 1Lc and 1Rc may be replaced with the earphones 1Lc and 1Rc, and 1Ld and 1Rd.

In Fig. 9, the wireless communication units 14L and 14R of the earphones 1La and 1Ra establish the wireless connection WL13 with neighboring devices (for example, the earphones 1Lc and 1Rc) (step St11). Similarly, the wireless communication units 14L and 14R of the earphones 1Lc and 1Rc establish the wireless connection WL13 with neighboring devices (for example, the earphones 1La and 1Ra) (step St21).

The earphones 1La and 1Ra collect, by the speech microphones MCL1 and MCR1, a speech voice (step StA) such as a talking voice of the person A during the remote web conference (step St12). The earphone control units S2L and S2R of the earphones 1La and 1Ra wirelessly transmit an audio data signal of the speech voice of the person A collected in step St12 to the neighboring devices (for example, the earphones 1Lc and 1Rc) via the wireless connection WL13 in step St11 (step St13). The wireless communication units 14L and 14R of the earphones 1Lc and 1Rc receive the audio data signal of the speech voice of the person A wirelessly transmitted in step St13 (step St24). The earphone control units S2L and S2R of the earphones 1Lc and 1Rc temporarily accumulate (store) the audio data signal of the speech voice of the person A received in step St24, in the RAMs 12L and 12R (the examples of the delay buffer) as the reference signal (the collected audio data) for the echo cancellation processing, respectively (step St25).

Similarly, the earphones 1Lc and 1Rc collect, by the speech microphones MCL1 and MCR1, a speech voice (step StC) such as a talking voice of the person C during the remote web conference (step St22). The earphone control units S2L and S2R of the earphones 1Lc and 1Rc wirelessly transmit an audio data signal of the speech voice of the person C collected in step St22 to the neighboring devices (for example, the earphones 1La and 1Ra) via the wireless connection WL13 in step St21 (step St23). The wireless communication units 14L and 14R of the earphones 1La and 1Ra receive the audio data signal of the speech voice of the person C wirelessly transmitted in step St23 (step St14). The earphone control units S2L and S2R of the earphones 1La and 1Ra temporarily accumulate (store) the audio data signal of the speech voice of the person C received in step St14, in the RAMs 12L and 12R (the examples of the delay buffer) as the reference signal (the collected audio data) for the echo cancellation processing, respectively (step St15).

The earphone control units S2L and S2R of the earphones 1La and 1Ra receive and acquire the audio data signals (that is, the audio-processed data of the other user speech voice transmitted from the laptop PCs 2b and 2c to the laptop PC 2a via the network NW1 during the remote web conference) transmitted from a line side (in other words, the network NW1 and the laptop PC 2a) (step St16). That is, the earphone control units S2L and S2R of the earphones 1La and 1Ra acquire the audio-processed data of the other user speech voice (the audio data signal of the speech voice of the person B and the audio data signal of the speech voice of the person C) transmitted via the video and audio processing software installed in the laptop PCs 2b and 2c and the network NW1.

The earphone control units S2L and S2R of the earphones 1La and 1Ra execute the echo cancellation processing for canceling the collected audio data temporarily accumulated in step St15 as a component of the reference signal from the audio-processed data of the other user speech voice (the audio data signal of the speech voice of the person B and the audio data signal of the speech voice of the person C) acquired in step St16 (step St17). The processing itself in step St17 is a known technique, and thus the detailed description thereof will be omitted, but in order to effectively cancel the component of the collected audio data (the audio data signal of the speech voice of the person C) included in the audio-processed data of the other user speech voice, for example, the earphone control units S2L and S2R of the earphones 1La and 1Ra execute the echo cancellation processing so as to cancel the component from the audio-processed data of the other user speech voice after executing delay processing for a certain time on the collected audio data (the audio data signal of the speech voice of the person C). Accordingly, the earphone control units S2L and S2R of the earphones 1La and 1Ra can execute the echo cancellation processing with high accuracy on the component of the reference signal (for example, the audio data signal of the speech voice of the person C) included in the audio-processed data of the other user speech voice, and can clearly output the audio data signal of the speech voice of the person B, who is not located near the person A, from the speakers SPL1 and SPR1, thereby supporting improvement of the easiness of hearing of the person A.

The earphone control units S2L and S2R of the earphones 1La and 1Ra output, as audio, an audio data signal after the echo cancellation processing in step St17 (that is, the audio data signal of the speech voice of the person B obtained by canceling the audio data signal of the speech voice of the person C) from the speakers SPL1 and SPR1 (step St18). After step St18, when a call ends (that is, the remote web conference ends) (step St19: YES), the processing of the earphones 1La and 1Ra shown in Fig. 9 ends.

On the other hand, after step St18, when the call does not end (that is, the remote web conference continues) (step St19: NO), the earphones 1La and 1Ra continuously repeat a series of processing from step St12 to step St18 until the call ends.

Similarly, the earphone control units S2L and S2R of the earphones 1Lc and 1Rc receive and acquire the audio data signals (that is, the audio-processed data of the other user speech voice transmitted from the laptop PCs 2b and 2a to the laptop PC 2c via the network NW1 during the remote web conference) transmitted from a line side (in other words, the network NW1 and the laptop PC 2c) (step St26). That is, the earphone control units S2L and S2R of the earphones 1Lc and 1Rc acquire the audio-processed data of the other user speech voice (the audio data signal of the speech voice of the person B and the audio data signal of the speech voice of the person A) transmitted via the video and audio processing software installed in the laptop PCs 2b and 2a and the network NW1.

The earphone control units S2L and S2R of the earphones 1Lc and 1Rc execute the echo cancellation processing for canceling the collected audio data temporarily accumulated in step St25 as a component of the reference signal from the audio-processed data of the other user speech voice (the audio data signal of the speech voice of the person B and the audio data signal of the speech voice of the person A) acquired in step St26 (step St27). The processing itself in step St27 is a known technique, and thus the detailed description thereof will be omitted, but in order to effectively cancel the component of the collected audio data (the audio data signal of the speech voice of the person A) included in the audio-processed data of the other user speech voice, for example, the earphone control units S2L and S2R of the earphones 1Lc and 1Rc execute the echo cancellation processing so as to cancel the component from the audio-processed data of the other user speech voice after executing the delay processing for a certain time on the collected audio data (the audio data signal of the speech voice of the person A). Accordingly, the earphone control units S2L and S2R of the earphones 1Lc and 1Rc can execute the echo cancellation processing with high accuracy on the component of the reference signal (for example, the audio data signal of the speech voice of the person A) included in the audio-processed data of the other user speech voice, and can clearly output the audio data signal of the speech voice of the person B, who is not located near the person C, from the speakers SPL1 and SPR1, thereby supporting improvement of the easiness of hearing of the person C.

The earphone control units S2L and S2R of the earphones 1Lc and 1Rc output, as audio, an audio data signal after the echo cancellation processing in step St27 (that is, the audio data signal of the speech voice of the person B obtained by canceling the audio data signal of the speech voice of the person A) from the speakers SPL1 and SPR1 (step St28). After step St28, when the call ends (that is, the remote web conference ends) (step St29: YES), the processing of the earphones 1Lc and 1Rc shown in Fig. 9 ends.

On the other hand, after step St28, when the call does not end (that is, the remote web conference continues) (step St29: NO), the earphones 1Lc and 1Rc continuously repeat a series of processing from step St22 to step St28 until the call ends.

As described above, in the conference system 100A according to the second embodiment, the earphone 1L (for example, the earphones 1La and 1Ra of the person A) is worn by a user (for example, the person A), and includes a communication interface (the wireless communication units 14L and 14R) capable of performing data communication with an own user terminal (the laptop PC 2a) communicably connected to at least one another user terminal (the laptop PC 2b, 2c, or 2d) via the network NW1 and another earphone (the earphone 1Lc and 1Rc, or 1Ld and 1Rd) to be worn by at least one another user (for example, the person C or the person D) located near the user, the buffer (the RAMs 12L and 12R) configured to accumulate collected audio data of a speech voice of the other user during a conference, which is collected by the other earphone and transmitted from the other earphone, and a signal processing unit (the earphone control units S2L and S2R) configured to execute, by using audio-processed data of the other user speech voice (that is, an audio data signal subjected to predetermined signal processing by the video and audio processing software of the laptop PC 2b, 2c, or 2d) transmitted from the other user terminal to the own user terminal via the network NW1 during the conference and the collected audio data accumulated in the buffer, cancellation processing (the echo cancellation processing) for canceling a component of the speech voice of the other user included in the audio-processed data. Accordingly, in a conference (for example, the remote web conference) or the like in which a commuting participant (for example, the person A, the person C, and the person D) and a telecommuting participant (for example, the person B) are mixed, the earphones 1La and 1Ra use, for the echo cancellation processing, audio data signals obtained by collecting, by the earphones 1Lc, 1Rc, 1Ld, and 1Rd, the speech voices of the person C and the person D who are the other users located near a listener (for example, the person A who is located near the person C and the person D) and wirelessly transmitting the speech voices, and thus it is possible to efficiently prevent an omission in listening to a speech content of a user (for example, the person B, the person C, or the person D) other than the person A, and to support smooth progress of the conference or the like.

The signal processing unit (the earphone control units S2L and S2R) executes the delay processing for a certain time on the collected audio data (the audio data signals of the speech voices of the person C and the person D wirelessly transmitted from the earphones 1Lc, 1Rc, 1Ld, and 1Rd). The signal processing unit executes the cancellation processing (the echo cancellation processing) by using the audio-processed data (that is, the audio data signal subjected to the predetermined signal processing by the video and audio processing software of the laptop PC 2b, 2c, or 2d) and the collected audio data after the delay processing. Accordingly, the earphones 1La and 1Ra can cancel (delete) the respective components of the speech voice of the person C and the speech voice of the person D included in the audio-processed data of the other user speech voice (the audio data signal of the speech voice of the person B, the audio data signal of the speech voice of the person C, and the audio data signal of the speech voice of the person D) transmitted from the laptop PCs 2b, 2c, and 2d via the network NW1.

The certain time is an average time required for the communication interface (the wireless communication units 14L and 14R) to receive the audio-processed data from the other user terminal (the laptop PC 2b, 2c, or 2d) via the network NW1 and the own user terminal (the laptop PC 2a). The certain time is stored in the ROMs 11L and 11R or the RAMs 12L and 12R of the earphones 1La and 1Ra. Accordingly, the earphones 1La and 1Ra can execute the echo cancellation processing with high accuracy on the component of the reference signal (for example, the audio data signals of the speech voices of the person C and the person D wirelessly transmitted from the earphones 1Lc, 1Rc, 1Ld, and 1Rd) included in the audio-processed data of the other user speech voice, and can clearly output the audio data signal of the speech voice of the person B, who is not located near the person A, from the speakers SPL1 and SPR1, thereby supporting the improvement of the easiness of hearing of the person A.

The earphones 1La and 1Ra further include the respective speakers SPL1 and SPR1 configured to output the audio-processed data after the cancellation processing. Accordingly, the earphones 1La and 1Ra can prevent an influence of the audio data signals of the speech voices of the person C and the person D who are located near the person A, and can output the audio data signal of the speech voice of the person B as audio.

### (Third Embodiment)

In the first and second embodiments, the audio data signals of the speech voices of the person C and the person D, which are the reference signals used for the echo cancellation processing, are acquired by the earphones 1La and 1Ra of the person A.

In a third embodiment, an example will be described in which the charging case 30a as an example of an accessory case for charging the earphones 1L1a and 1R1a of the person A is used to acquire audio data signals of speech voices of the person C and the person D, which are reference signals used for echo cancellation processing.

### <System Configuration>

First, a system configuration example of a conference system 100B according to the third embodiment will be described with reference to Fig. 10. Fig. 10 is a diagram showing the system configuration example of the conference system 100B according to the third embodiment. The conference system 100B includes at least the laptop PCs 2a, 2b, 2c, and 2d, earphones 1L1a, 1R1a, 1Lc, 1Rc, 1Ld, and 1Rd, and the charging case 30a. In the description of a configuration of the conference system 100B according to the third embodiment, the same configurations as those of the conference system 100 according to the first embodiment are denoted by the same reference numerals, and the description thereof will be simplified or omitted, and different contents will be described.

In the third embodiment, similarly to the first embodiment, hardware configuration examples and external appearance examples of the earphones 1L1a and 1R1a of the person A, the earphones 1Lc and 1Rc of the person C, and the earphones 1Ld and 1Rd of the person D may be the same or may not be the same.

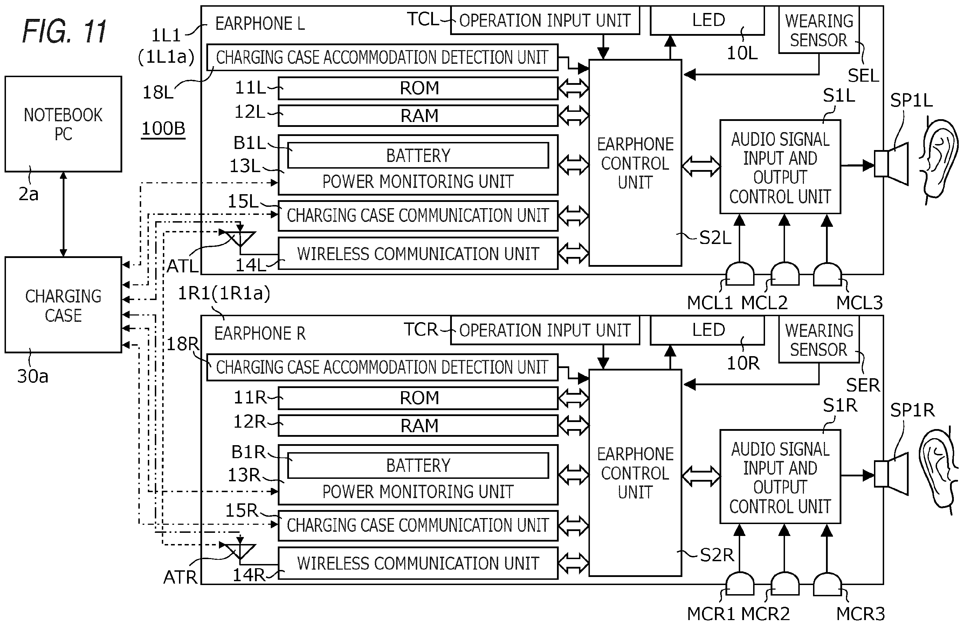

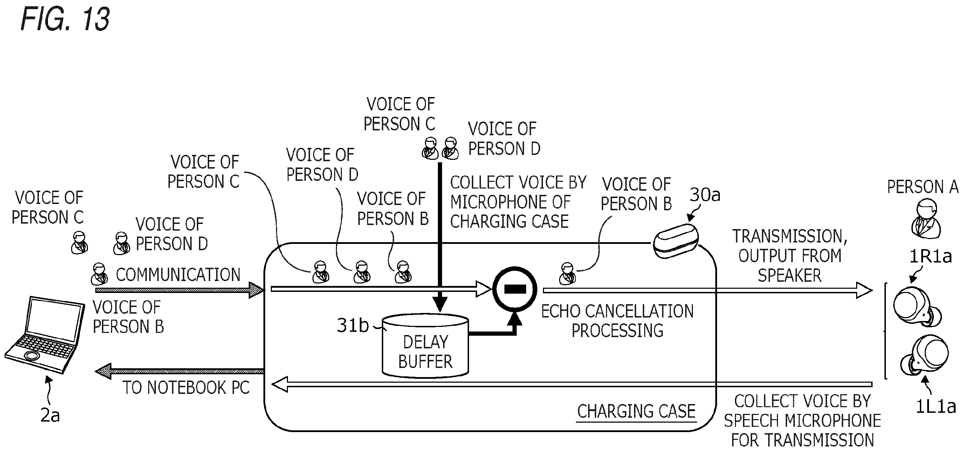

The earphones 1L1a and 1R1a are worn by the person A, and are connected to the charging case 30a in the third embodiment so as to enable audio data signal communication. In the third embodiment, at least the earphones 1L1a and 1R1a receive, from the charging case 30a, an audio data signal after echo cancellation processing (see Fig. 13) executed by the charging case 30a, and output the audio data signal as audio. The connection between the earphones 1L1a and 1R1a and the charging case 30a may be a wired connection or a wireless connection. Specific hardware configuration examples of the earphones 1L1a and 1R1a will be described later with reference to Fig. 11. The external appearance examples of the earphones 1L1a and 1R1a are the same as those described with reference to Figs. 3 and 4, and thus the description thereof will be omitted.

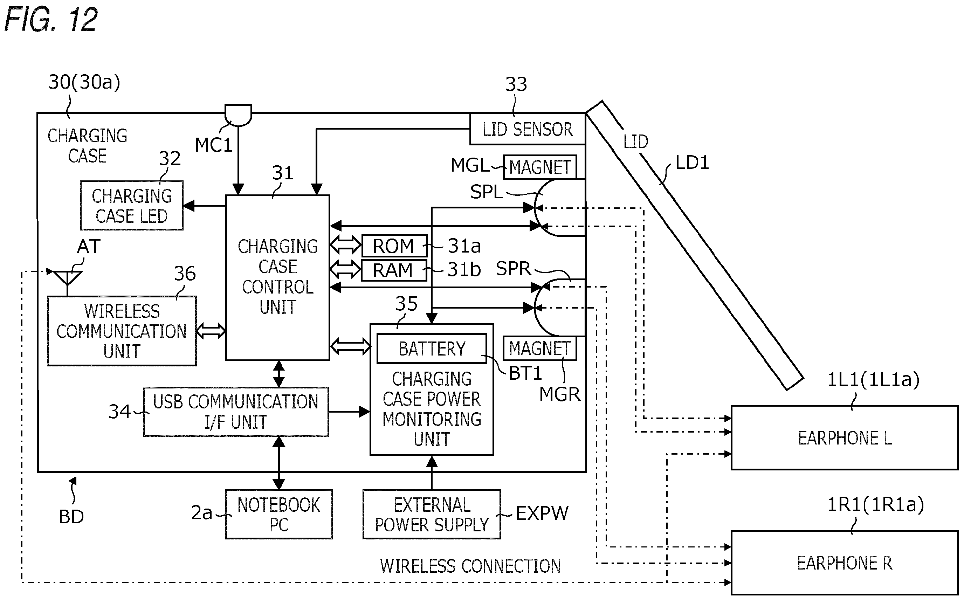

Next, the hardware configuration examples of the earphones 1L1a and 1R1a and a hardware configuration example of the charging case 30a will be described with reference to Figs. 11 and 12. Fig. 11 is a block diagram showing the hardware configuration examples of the left and right earphones 1L1a and 1R1a, respectively. Fig. 12 is a block diagram showing the hardware configuration example of the charging case 30a according to the third embodiment. In the description of Fig. 11, the same configurations as those in Fig. 2 are denoted by the same reference numerals, and the description thereof will be simplified or omitted, and different contents will be described.

The earphones 1L1a and 1R1a further include charging case communication units 15L and 15R and charging case accommodation detection units 18L and 18R in addition to the earphones 1La and 1Ra according to the first embodiment, respectively.

Each of the charging case communication units 15L and 15R is implemented by a communication circuit that performs data signal communication with the charging case 30a while housing bodies of the earphones 1L1a and 1R1a are accommodated in the charging case 30a (specifically, in earphone accommodation spaces SPL and SPR provided in the charging case 30a). The charging case communication units 15L and 15R communicate (transmit and receive) data signals with a charging case control unit 31 of the charging case 30a while the housing bodies of the earphones 1L1a and 1R1a are accommodated in the charging case 30a (specifically, in the earphone accommodation spaces SPL and SPR provided in the charging case 30a).

Each of the charging case accommodation detection units 18L and 18R is implemented by a device that detects whether the housing bodies of the earphones 1L1a and 1R1a are accommodated in the charging case 30a (specifically, in the earphone accommodation spaces SPL and SPR provided in the charging case 30a), and is implemented by, for example, a magnetic sensor. The charging case accommodation detection units 18L and 18R detect that the housing bodies of the earphones 1L1a and 1R1a are accommodated in the charging case 30a by determining that a detected magnetic force is larger than a threshold of the earphones 1L1a and 1R1a, for example. On the other hand, the charging case accommodation detection units 18L and 18R detect that the housing bodies of the earphones 1L1a and 1R1a are not accommodated in the charging case 30a by determining that the detected magnetic force is smaller than the threshold of the earphones 1L1a and 1R1a. The charging case accommodation detection units 18L and 18R transmit, to the earphone control units S2L and S2R, a detection result as to whether the housing bodies of the earphones 1L1a and 1R1a are accommodated in the charging case 30a. Each of the charging case accommodation detection units 18L and 18R may be implemented by a sensor device (for example, an infrared sensor) other than the magnetic sensor.

The charging case 30a includes a main-body housing body portion BD having the earphone accommodation spaces SPL and SPR capable of accommodating the earphones 1L1a and 1R1a, respectively, and a lid LD1 openable and closable with respect to the main-body housing body portion BD by a hinge or the like. The charging case 30a includes a microphone MC1, the charging case control unit 31, a ROM 31a, a RAM 31b, a charging case LED 32, a lid sensor 33, a USB communication I/F unit 34, a charging case power monitoring unit 35 including a battery BT1, a wireless communication unit 36 including an antenna AT, and magnets MGL and MGR.

The microphone MC1 is a microphone device that is exposed on the main-body housing body portion BD and collects an external ambient sound. The microphone MC1 collects a speech voice of another user (for example, the person C or the person D) located near the person A during a remote web conference. An audio data signal obtained by the sound collection is input to the charging case control unit 31.

The charging case control unit 31 is implemented by, for example, a processor such as a CPU, an MPU, or a field programmable gate array (FPGA). The charging case control unit 31 functions as a controller that controls the overall operation of the charging case 30a, and executes control processing for integrally controlling operations of the units of the charging case 30a, data input and output processing with the units of the charging case 30a, data arithmetic processing, and data storage processing. The charging case control unit 31 operates according to a program and data stored in the ROM 31a included in the charging case 30a, or uses the RAM 31b included in the charging case 30a at the time of operation so as to temporarily store, in the RAM 31b, data or information created or acquired by the charging case control unit 31 or to transmit the data or the information to each of the earphones 1L1a and 1R1a.

The charging case LED 32 includes at least one LED element, and performs, in response to a control signal from the charging case control unit 31, lighting up, blinking, or a combination of lighting up and blinking according to a pattern corresponding to the control signal. The charging case LED 32 lights up a predetermined color (for example, green), for example, while both the earphones 1L1a and 1R1a are being accommodated and charged. The charging case LED 32 is disposed, for example, on a central portion of a bottom surface of a recessed step portion provided on one end side of an upper end central portion of the main-body housing body portion BD of the charging case 30a. By disposing the charging case LED 32 at this position, the person A can intuitively and easily recognize that both the earphones 1L1a and 1R1a are being charged in the charging case 30a.

The lid sensor 33 is implemented by a device capable of detecting whether the lid LD1 is in an open state or a closed state with respect to the main-body housing body portion BD of the charging case 30a, and is implemented by, for example, a pressure sensor capable of detecting the opening and closing of the lid LD1 based on a pressure when the lid LD 1 is closed. The lid sensor 33 may not be limited to the above pressure sensor, and may be implemented by a magnetic sensor capable of detecting the opening and closing of the lid LD 1 based on a magnetic force when the lid LD1 is closed. When it is detected that the lid LD1 is closed (that is, not opened) or is not closed (that is, opened), the lid sensor 33 transmits a signal indicating the detection result to the charging case control unit 31.

The lid LD 1 is provided to prevent exposure of the main-body housing body portion BD of the charging case 30a capable of accommodating the earphones 1L1a and 1R1a.

The USB communication I/F unit 34 is a port that is connected to the laptop PC 2a via a universal serial bus (USB) cable to enable input and output of data signals. The USB communication I/F unit 34 receives a data signal from the laptop PC 2a and transmits the data signal to the charging case control unit 31, or receives a data signal from the charging case control unit 31 and transmits the data signal to the laptop PC 2a.

The charging case power monitoring unit 35 includes the battery BT1 and is implemented by a circuit for monitoring remaining power of the battery BT1. The charging case power monitoring unit 35 charges the battery BT1 of the charging case 30a by receiving a supply of power from an external power supply EXPW, or monitors the remaining power of the battery BT1 periodically or constantly and transmits the monitoring result to the charging case control unit 31.

The wireless communication unit 36 includes the antenna AT, and establishes a wireless connection between the charging case 30a and the earphones 1L1a and 1R1a so as to enable audio data signal communication via the antenna AT. The wireless communication unit 36 performs short-range wireless communication according to, for example, a communication standard of Bluetooth (registered trademark). The wireless communication unit 36 may be provided in a manner connectable to a communication line such as Wi-Fi (registered trademark), a mobile communication line, or the like.

The magnet MGL is provided to determine whether the housing body of the earphone 1L1a is accommodated in the earphone accommodation space SPL of the charging case 30a, and is disposed near the earphone accommodation space SPL.

The magnet MGR is provided to determine whether the housing body of the earphone 1R1a is accommodated in the earphone accommodation space SPR of the charging case 30a, and is disposed near the earphone accommodation space SPR.

The earphone accommodation space SPL is implemented by a space capable of accommodating the housing body of the earphone 1L1a in the main-body housing body portion BD of the charging case 30a.

The earphone accommodation space SPR is implemented by a space capable of accommodating the housing body of the earphone 1R1a in the main-body housing body portion BD of the charging case 30a.

### <Outline of Operation>

Next, an operation outline example of the conference system 100B according to the third embodiment will be described with reference to Fig. 13. Fig. 13 is a diagram schematically showing the operation outline example of the conference system 100B according to the third embodiment. In the example of Fig. 13, as described with reference to Fig. 1, a situation in which the person A is a specific person, and the direct voices DR13 and DR14 of the speech voices of the person C and the person D who are located near the person A during the remote web conference are collected by the microphone MC1 of the charging case 30a will be described as an example. The description of contents redundant with the description of Fig. 5 will be simplified or omitted, and different contents will be described.

As described above, the person B participates in the remote web conference outside the office by connecting the laptop PC 2b to the network NW1. Therefore, an audio data signal of a speech voice of the person B during the remote web conference is received by the laptop PC 2a of the person A from the laptop PC 2b via the network NW1.

On the other hand, the person C and the person D participate in the remote web conference in a state of being located near the person A. The audio data signal of the speech voice of the person C during the remote web conference is collected by the earphones 1Lc and 1Rc, transmitted to the laptop PC 2c, and then received by the laptop PC 2a of the person A from the laptop PC 2c via the network NW1. Similarly, the audio data signal of the speech voice of the person D during the remote web conference is collected by the earphones 1Ld and 1Rd, transmitted to the laptop PC 2d, and then received by the laptop PC 2a of the person A from the laptop PC 2d via the network NW1. Further, the charging case 30a of the person A collect, by the microphone MC1, the direct voice DR13 of the speech voice of the person C and the direct voice DR14 of the speech voice of the person D who are located near the person A. The charging case control unit 31 of the charging case 30a temporarily accumulates (stores) the audio data signal of the collected direct voice DR13 and the audio data signal of the collected direct voice DR14 in the RAM 31b (an example of the delay buffer) as collected audio data.

The charging case control unit 31 of the charging case 30a uses the audio data signals transmitted from the laptop PC 2a (that is, audio-processed data of the other user speech voice transmitted from the laptop PCs 2b, 2c, and 2d to the laptop PC 2a via the network NW1 during the remote web conference) and the collected audio data temporarily accumulated in the RAM 31b to execute the echo cancellation processing using the collected audio data as the reference signal. More specifically, the charging case control unit 31 executes the echo cancellation processing for canceling a component of the reference signal included in the audio-processed data of the other user speech voice (the audio data signal of the speech voice of the person B, the audio data signal of the speech voice of the person C, and the audio data signal of the speech voice of the person D) transmitted via the video and audio processing software installed in the laptop PCs 2b, 2c, and 2d and the network NW1.

Accordingly, the charging case control unit 31 can cancel (delete) respective components of the speech voice of the person C and the speech voice of the person D included in the audio-processed data of the other user speech voice (the audio data signal of the speech voice of the person B, the audio data signal of the speech voice of the person C, and the audio data signal of the speech voice of the person D) transmitted from the laptop PCs 2b, 2c, and 2d via the network NW1, and can wirelessly transmit the audio data signal of the speech voice of the person B to the earphones 1L1a and 1R1a to cause the speakers SPL1 and SPR1 to output the audio data signal as audio. In addition, during the remote web conference, the person A can listen to the speech voice of the person C based on the direct voice DR13, and similarly, can listen to the speech voice of the person D based on the direct voice DR14.

### <Operation Procedure>

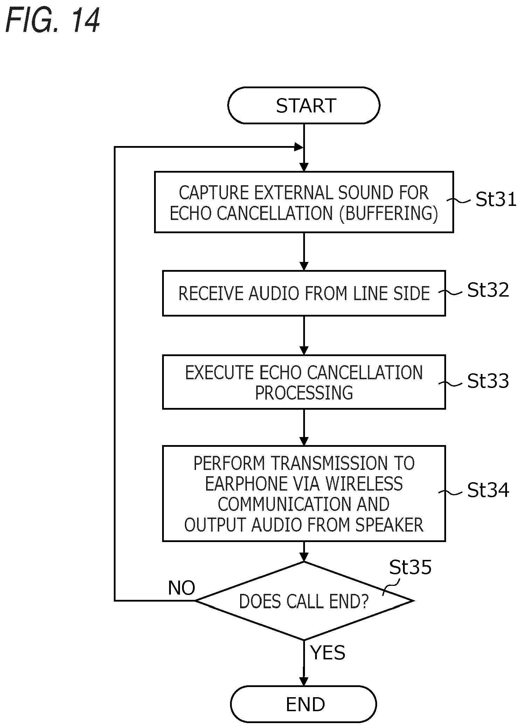

Next, an operation procedure example of the charging case 30a of the person A in the conference system 100B according to the third embodiment will be described with reference to Fig. 14. Fig. 14 is a flowchart showing the operation procedure example of the charging case 30a according to the third embodiment in time series. The processing shown in Fig. 14 is mainly executed by the charging case control unit 31 of the charging case 30a. In the description of Fig. 14, similarly to the example of Fig. 13, a situation in which the person A is the specific person, and the direct voices DR13 and DR14 of the speech voices of the person C and the person D who are located near the person A during the remote web conference are collected by the microphone MC1 of the charging case 30a will be described as an example.

In Fig. 14, the charging case 30a collects sounds by the microphone MC1 in order to capture an external sound (for example, the direct voice DR13 of the speech voice of the person C during the remote web conference and the direct voice DR14 of the speech voice of the person D during the remote web conference) for the echo cancellation processing in step St33 (step St31). The charging case control unit 31 temporarily accumulates (stores) the audio data signal of the collected direct voice DR13 and the audio data signal of the collected direct voice DR14 in the RAM 31b (the example of the delay buffer) as the collected audio data (step St31).

The charging case control unit 31 receives and acquires the audio data signals(that is, the audio-processed data of the other user speech voice transmitted from the laptop PCs 2b, 2c, and 2d to the laptop PC 2a via the network NW1 during the remote web conference) transmitted from a line side (in other words, the network NW1 and the laptop PC 2a) (step St32). That is, the charging case control unit 31 acquires the audio-processed data of the other user speech voice (the audio data signal of the speech voice of the person B, the audio data signal of the speech voice of the person C, and the audio data signal of the speech voice of the person D) transmitted via the video and audio processing software installed in the laptop PCs 2b, 2c, and 2d and the network NW1.

The charging case control unit 31 executes the echo cancellation processing for canceling the collected audio data temporarily accumulated in step St31 as a component of the reference signal from the audio-processed data of the other user speech voice (the audio data signal of the speech voice of the person B, the audio data signal of the speech voice of the person C, and the audio data signal of the speech voice of the person D) acquired in step St32 (step St33). The processing itself in step St33 is a known technique, and thus the detailed description thereof will be omitted, but in order to effectively cancel the component of the collected audio data (the direct voices DR13 and DR14) included in the audio-processed data of the other user speech voice, for example, the charging case control unit 31 executes the echo cancellation processing so as to cancel the component from the audio-processed data of the other user speech voice after executing delay processing for a certain time on the collected audio data (the direct voices DR13 and DR14). Accordingly, the charging case control unit 31 can execute the echo cancellation processing with high accuracy on the component of the reference signal (for example, the direct voice DR13 based on the speech of the person C and the direct voice DR14 based on the speech of the person D) included in the audio-processed data of the other user speech voice, and can cause the speakers SPL1 and SPR1 to clearly output the audio data signal of the speech voice of the person B, who is not located near the person A, thereby supporting improvement of the easiness of hearing of the person A.

The charging case control unit 31 wirelessly transmits an audio data signal after the echo cancellation processing in step St33 (that is, the audio data signal of the speech voice of the person B obtained by canceling the audio data signal of the speech voice of the person C and the audio data signal of the speech voice of the person D) to the earphones 1L1a and 1R1a via the wireless communication unit 36, and causes the speakers SPL1 and SPR1 to output the audio data signal as audio (step St34). After step St34, when a call ends (that is, the remote web conference ends) (step St35: YES), the processing of the charging case 30a shown in Fig. 14 ends.

On the other hand, after step St34, when the call does not end (that is, the remote web conference continues) (step St35: NO), the charging case 30a continuously repeats a series of processing from step St31 to step St34 until the call ends.

As described above, a case (the charging case 30a) of an earphone according to the third embodiment is connected to the earphones 1L1a and 1R1a to be worn by a user (for example, the person A) so as to be able to perform data communication. The case of the earphone includes a communication interface (the USB communication I/F unit 34) capable of performing data communication with an own user terminal (the laptop PC 2a) communicably connected to at least one another user terminal (the laptop PC 2b, 2c, or 2d) via the network NW1, an accessory case microphone (the microphone MC1) configured to collect a speech voice of at least one another user (for example, the person C or the person D) located near the user during the conference, the buffer (the RAM 31b) configured to accumulate collected audio data of the speech voice of the other user, which is collected by the accessory case microphone, and a signal processing unit (the charging case control unit 31) configured to execute, by using audio-processed data (that is, an audio data signal subjected to predetermined signal processing by the video and audio processing software of the laptop PC 2b, 2c, or 2d) of the other user speech voice transmitted from the other user terminal to the own user terminal via the network NW1 during the conference and the collected audio data accumulated in the buffer, cancellation processing (the echo cancellation processing) for canceling a component of the speech voice of the other user included in the audio-processed data. Accordingly, in a conference (for example, the remote web conference) or the like in which a commuting participant (for example, the person A, the person C, and the person D) and a telecommuting participant (for example, the person B) are mixed, the case of the earphone directly collects the direct voices DR13 and DR14 of the speech voices of the person C and the person D who are the other users located near a listener (for example, the person A who is located near the person C and the person D) and use the direct voices DR13 and DR14 for the echo cancellation processing, and thus it is possible to efficiently prevent an omission in listening to a speech content of a user (for example, the person B, the person C, or the person D) other than the person A, and to support smooth progress of the conference or the like.

The signal processing unit (the charging case control unit 31) executes the delay processing for a certain time on the collected audio data (the respective audio data signals of the direct voices DR13 and DR14 of the speech voices of the person C and the person D collected by the microphone MC1). The signal processing unit executes the cancellation processing (the echo cancellation processing) by using the audio-processed data (that is, the audio data signal subjected to the predetermined signal processing by the video and audio processing software of the laptop PC 2b, 2c, or 2d) and the collected audio data after the delay processing. Accordingly, the case of the earphone can cancel (delete) the respective components of the speech voice of the person C and the speech voice of the person D included in the audio-processed data of the other user speech voice (the audio data signal of the speech voice of the person B, the audio data signal of the speech voice of the person C, and the audio data signal of the speech voice of the person D) transmitted from the laptop PCs 2b, 2c, and 2d via the network NW1.

The certain time is an average time required for the communication interface (the wireless communication unit 36) to receive the audio-processed data from the other user terminal (the laptop PC 2b, 2c, or 2d) via the network NW1 and the own user terminal (the laptop PC 2a). The certain time is stored in the ROM 31a or the RAM 31b of the charging case 30a. Accordingly, the case of the earphone can execute the echo cancellation processing with high accuracy on the component of the reference signal (for example, the direct voice DR13 based on the speech of the person C and the direct voice DR14 based on the speech of the person D) included in the audio-processed data of the other user speech voice, and can clearly output the audio data signal of the speech voice of the person B, who is not located near the person A, from the speakers SPL 1 and SPR1, thereby supporting the improvement of the easiness of hearing of the person A.

The signal processing unit (the charging case control unit 31) is configured to cause the earphones 1L1a and 1R1a to output the audio-processed data after the cancellation processing. Accordingly, the case of the earphone can prevent an influence of the direct voices DR13 and DR14 of the speech voices of the person C and the person D who are located near the person A, and can output the audio data signal of the speech voice of the person B as audio.

### (Fourth Embodiment)

In the third embodiment, the direct voice DR13 of the speech voice of the person C who is another user located near the person A as viewed from the person A and the direct voice DR14 of the speech voice of the person D who is another user located near the person A as viewed from the person A are collected by the charging case 30a of the person A. Accordingly, as the reference signal used for the echo cancellation processing, the audio data signal of the direct voice DR13 of the speech voice of the person C and the audio data signal of the direct voice DR14 of the speech voice of the person D are used in the earphones 1La and 1Ra.

In a fourth embodiment, the person A, the person C, and the person D respectively wear a pair of the charging case 30a and the earphones 1L1a and 1R1a, a pair of a charging case 30c and earphones 1L1c and 1R1c, and a pair of a charging case 30d and earphones 1L1d and 1R1d having the same configuration, and the charging cases are connected so as to be able to wirelessly communicate audio data signals with each other. Further, an example will be described in which, as a reference signal used for echo cancellation processing, an audio data signal of a speech voice of the person C collected by the earphones 1L1c and 1R1c and an audio data signal of a speech voice of the person D collected by the earphones 1L1d and 1R1d are wirelessly transmitted between the charging cases to be used in the charging case 30a.

### <System Configuration>

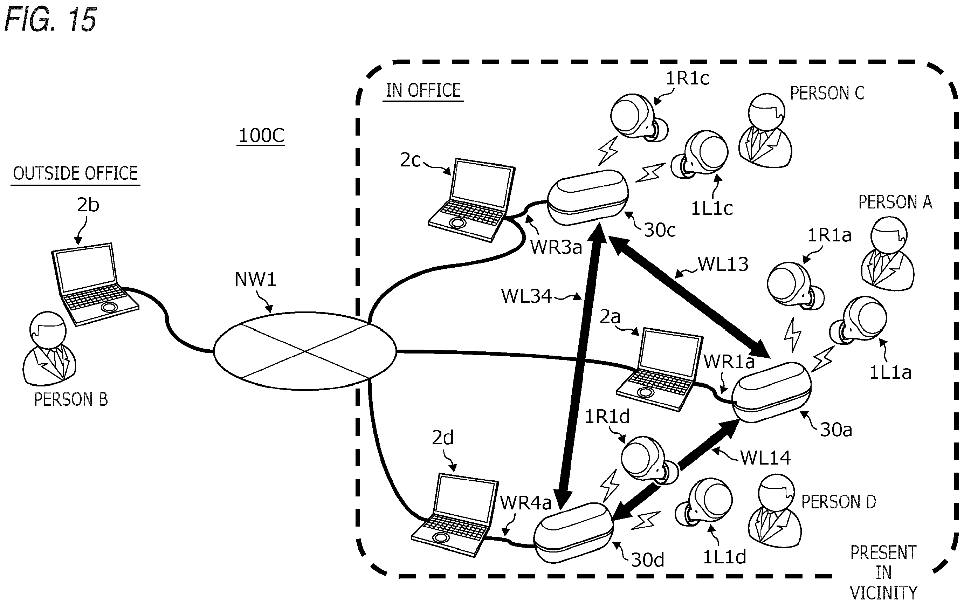

First, a system configuration example of a conference system 100C according to the fourth embodiment will be described with reference to Fig. 15. Fig. 15 is a diagram showing the system configuration example of the conference system 100C according to the fourth embodiment. Similarly to the conference system 100B according to the third embodiment, the conference system 100C includes at least the laptop PCs 2a, 2b, 2c, and 2d, the earphones 1L1a, 1R1a, 1L1c, 1R1c, 1L1d, and 1R1d, and the charging cases 30a, 30c, and 30d. In the description of a configuration of the conference system 100C according to the fourth embodiment, the same configurations as those of the conference system 100B according to the third embodiment are denoted by the same reference numerals, and the description thereof will be simplified or omitted, and different contents will be described.

In the fourth embodiment, similarly to the third embodiment, hardware configuration examples and external appearance examples of the earphones 1L1a and 1R1a of the person A, the earphones 1L1c and 1R1c of the person C, and the earphones 1L1d and 1R1d of the person D may be the same or different. Further, it is assumed that the hardware configuration examples of the charging case 30a of the person A, the charging case 30c of the person C, and the charging case 30d of the person D are the same.

The earphones 1L1c and 1R1c are worn by the person C, and are connected to the charging case 30c in the fourth embodiment so as to enable audio data signal communication. In the fourth embodiment, at least the earphones 1L1c and 1R1c receive, from the charging case 30c, an audio data signal after echo cancellation processing executed by the charging case 30c, and output the audio data signal as audio. The connection between the earphones 1L1c and 1R1c and the charging case 30c may be a wired connection or a wireless connection. Specific hardware configuration examples of the earphones 1L1c and 1R1c are the same as those described with reference to Fig. 11, and thus the description thereof will be omitted. The external appearance examples of the earphones 1L1c and 1R1c are the same as those described with reference to Figs. 3 and 4, and thus the description thereof will be omitted.

The earphones 1L1d and 1R1d are worn by the person D, and are connected to the charging case 30d in the fourth embodiment so as to enable audio data signal communication. In the fourth embodiment, at least the earphones 1L1d and 1R1d receive, from the charging case 30d, an audio data signal after echo cancellation processing executed by the charging case 30d, and output the audio data signal as audio. The connection between the earphones 1L1d and 1R1d and the charging case 30d may be a wired connection or a wireless connection. Specific hardware configuration examples of the earphones 1L1d and 1R1d are the same as those described with reference to Fig. 11, and thus the description thereof will be omitted. The external appearance examples of the earphones 1L1d and 1R1d are the same as those described with reference to Figs. 3 and 4, and thus the description thereof will be omitted.

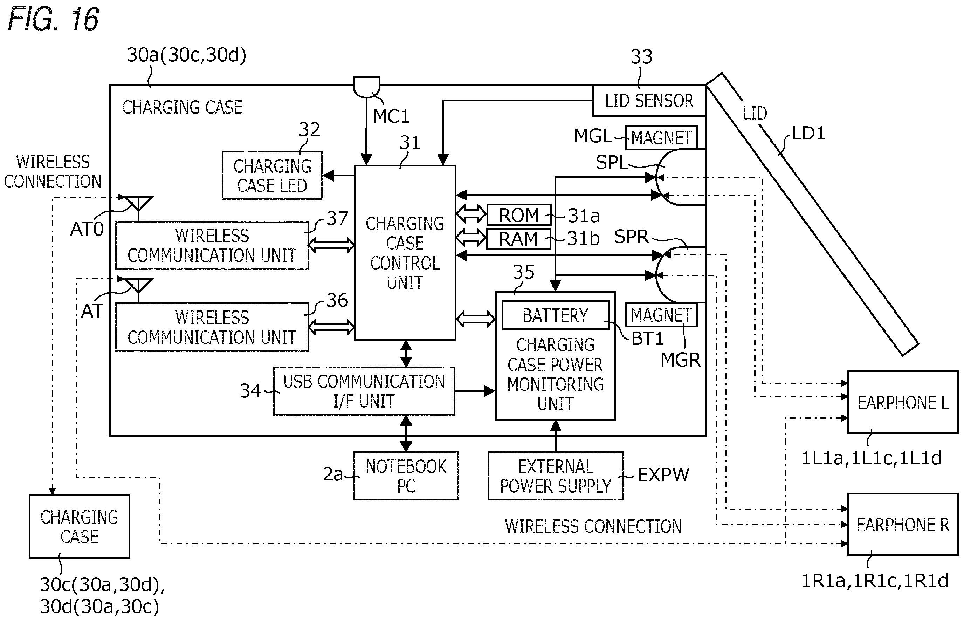

Next, the hardware configuration examples of the charging cases 30a, 30c, and 30d will be described with reference to Fig. 16. Fig. 16 is a block diagram showing the hardware configuration examples of the charging cases 30a, 30c, and 30d according to the fourth embodiment. Although the hardware configuration examples of the charging cases 30a, 30c, and 30d are the same, Fig. 16 illustrates the charging cases 30c and 30d as wireless connection partners for the charging case 30a, illustrates the charging cases 30a and 30d as wireless connection partners for the charging case 30c, and illustrates the charging cases 30a and 30c as wireless connection partners for the charging case 30d.

Each of the charging cases 30a, 30c, and 30d according to the fourth embodiment further includes a wireless communication unit 37 in addition to the charging case 30a according to the third embodiment.

The wireless communication unit 37 includes an antenna AT0, and establishes a wireless connection between the charging case 30a and the other charging cases (for example, the charging cases 30c and 30d) so as to enable audio data signal communication via the antenna AT0. The wireless communication unit 37 performs short-range wireless communication according to, for example, a communication standard of Bluetooth (registered trademark). The wireless communication unit 37 may be provided in a manner connectable to a communication line such as Wi-Fi (registered trademark), a mobile communication line, or the like.

### <Outline of Operation>

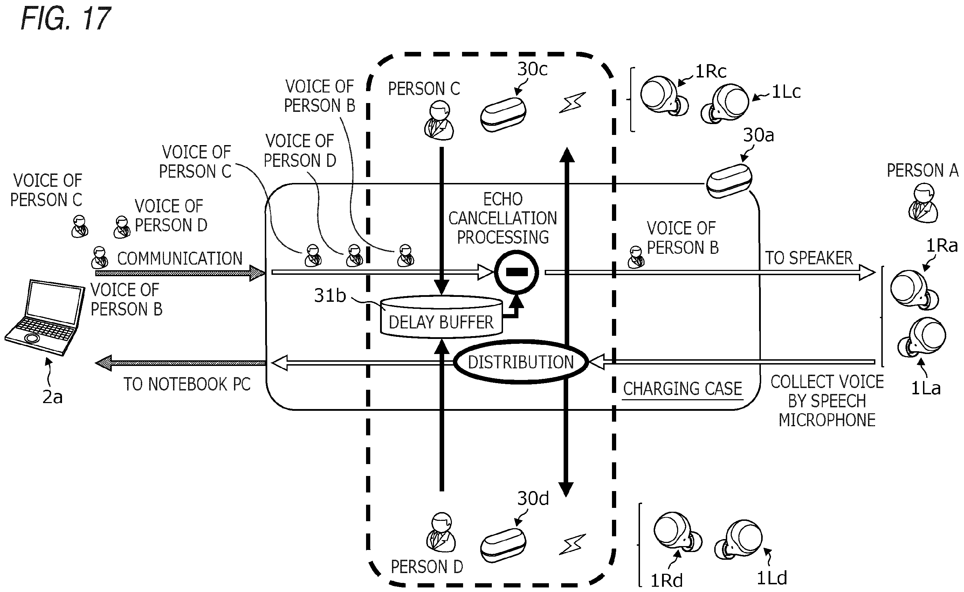

Next, an operation outline example of the conference system 100C according to the fourth embodiment will be described with reference to Fig. 17. Fig. 17 is a diagram schematically showing the operation outline example of the conference system 100C according to the fourth embodiment. In the example of Fig. 17, as described with reference to Fig. 1, a situation in which the person A is a specific person, and the audio data signals obtained by collecting the speech voices of the person C and the person D who are located near the person A during a remote web conference are wirelessly transmitted from the charging case 30c of the person C and the charging case 30d of the person D to the charging case 30a of the person A will be described as an example. The description of contents redundant with the description of Fig. 8 will be simplified or omitted, and different contents will be described.

However, the following description is similarly applicable to a situation in which the person C (or the person D) other than the person A is the specific person, and the audio data signals obtained by collecting the speech voices of the person D and the person A (or the person A and the person C) who are located near the person C (or the person D) during the remote web conference are wirelessly transmitted to the charging case of the person C (or the person D).

The person C and the person D participate in the remote web conference in a state of being located near the person A. The audio data signal of the speech voice of the person C during the remote web conference is collected by the earphones 1L1c and 1R1c, wirelessly transmitted to the charging case 30a via the charging case 30c and the wireless connection WL13 and transmitted to the laptop PC 2c, and then received by the laptop PC 2a of the person A from the laptop PC 2c via the network NW1. Similarly, the audio data signal of the speech voice of the person D during the remote web conference is collected by the earphones 1L1d and 1R1d, wirelessly transmitted to the charging case 30a via the charging case 30d and the wireless connection WL14 and transmitted to the laptop PC 2d, and then received by the laptop PC 2a of the person A from the laptop PC 2d via the network NW1. Further, the charging case control unit 31 of the charging case 30a temporarily accumulates (stores), in the RAM 31b (the example of the delay buffer) as collected audio data, the audio data signal of the speech voice of the person C wirelessly transmitted from the charging case 30c and the audio data signal of the speech voice of the person D wirelessly transmitted from the charging case 30d.

The charging case control unit 31 of the charging case 30a uses the audio data signals transmitted from the laptop PC 2a (that is, audio-processed data of the other user speech voice transmitted from the laptop PCs 2b, 2c, and 2d to the laptop PC 2a via the network NW1 during the remote web conference) and the collected audio data temporarily accumulated in the RAM 31b to execute the echo cancellation processing using the collected audio data as the reference signal. More specifically, the charging case control unit 31 executes the echo cancellation processing for canceling a component of the reference signal included in the audio-processed data of the other user speech voice (the audio data signal of the speech voice of the person B, the audio data signal of the speech voice of the person C, and the audio data signal of the speech voice of the person D) transmitted via the video and audio processing software installed in the laptop PCs 2b, 2c, and 2d and the network NW1.

Accordingly, the charging case control unit 31 can cancel (delete) respective components of the speech voice of the person C and the speech voice of the person D included in the audio-processed data of the other user speech voice (the audio data signal of the speech voice of the person B, the audio data signal of the speech voice of the person C, and the audio data signal of the speech voice of the person D) transmitted from the laptop PCs 2b, 2c, and 2d via the network NW1, and can wirelessly transmit the audio data signal of the speech voice of the person B to the earphones 1L1a and 1R1a to cause the speakers SPL1 and SPR1 to output the audio data signal as audio.

Although the detailed description is omitted, when the specific person is the person C (or the person D), the charging case 30a collects, by the speech microphones MCL1 and MCR1, an audio data signal of a speech voice spoken by the person A during the remote web conference, and transmit and distribute the collected audio data signal to the other laptop PCs (for example, the laptop PCs 2b, 2c, and 2d) via the laptop PC 2a and the network NW1, and further directly transmit the audio data of the speech voice of the person A to the other charging cases (for example, the charging cases 30c and 30d) by wireless transmission.

### <Operation Procedure>

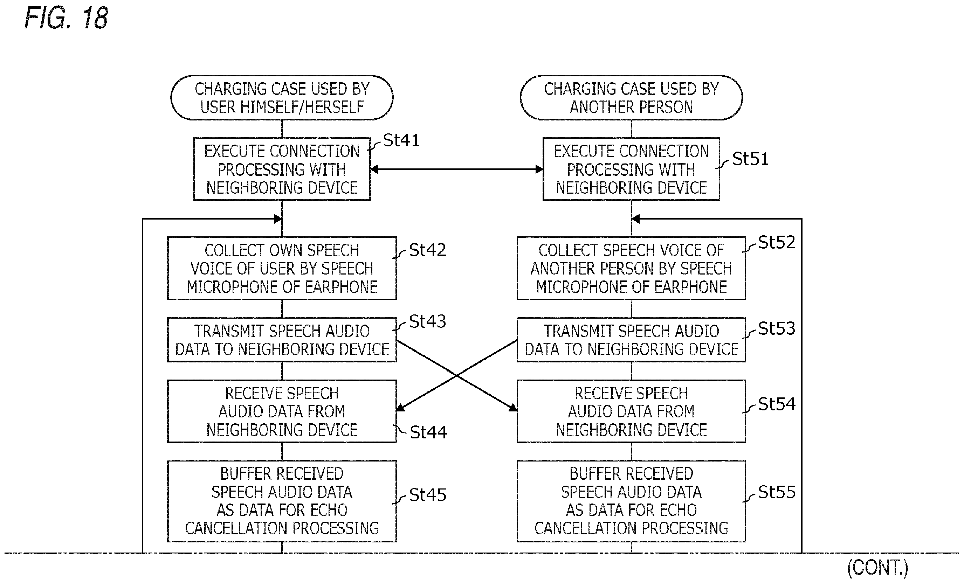

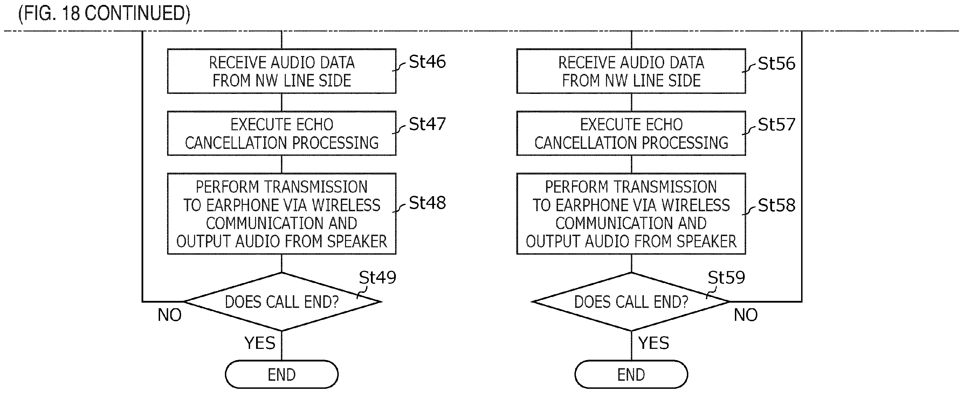

Next, an operation procedure example of the charging case 30a of the person A in the conference system 100C according to the fourth embodiment will be described with reference to Fig. 18. Fig. 18 is a sequence diagram showing the operation procedure example of the conference system 100C according to the fourth embodiment in time series. The processing shown in Fig. 18 is mainly executed by the charging case control unit 31 of the charging case 30a and the charging case control unit 31 of the charging case 30c. In the description of Fig. 18, a situation in which the person A is the specific person, and the audio data signal of the speech voice of the person C located near the person A during the remote web conference is wirelessly transmitted to the charging case 30a via the wireless connection WL13 will be described as an example. In the description of Fig. 18, the person C may be replaced with the person D and the charging case 30c may be replaced with the charging case 30d, or the person C may be replaced with the person C and the person D and the charging case 30c may be replaced with the charging cases 30c and 30d.

In Fig. 18, the wireless communication unit 37 of the charging case 30a establishes the wireless connection WL13 with a neighboring device (for example, the charging case 30c) (step St41). Similarly, the wireless communication unit 37 of the charging case 30c establishes the wireless connection WL13 with a neighboring device (for example, the charging case 30a) (step St51).

The charging case 30a collects, by the speech microphones MCL1 and MCR1, a speech voice such as a talking voice of the person A during the remote web conference (step St42). The charging case control unit 31 of the charging case 30a wirelessly transmits an audio data signal of the speech voice of the person A acquired in step St42 to the neighboring device (for example, the charging case 30c) via the wireless connection WL13 in step St41 (step St43). The wireless communication unit 37 of the charging case 30c receives the audio data signal of the speech voice of the person A wirelessly transmitted in step St43 (step St54). The charging case control unit 31 of the charging case 30c temporarily accumulates (stores) the audio data signal of the speech voice of the person A received in step St54, in the RAM 31b (the example of the delay buffer) as the reference signal (the collected audio data) for the echo cancellation processing (step St55).

Similarly, the charging case 30c collects, by the speech microphones MCL1 and MCR1, a speech voice such as a talking voice of the person C during the remote web conference (step St52). The charging case control unit 31 of the charging case 30c wirelessly transmits an audio data signal of the speech voice of the person C acquired in step St52 to the neighboring device (for example, the charging case 30a) via the wireless connection WL13 in step St51 (step St53). The wireless communication unit 37 of the charging case 30a receives the audio data signal of the speech voice of the person C wirelessly transmitted in step St53 (step St44). The charging case control unit 31 of the charging case 30a temporarily accumulates (stores) the audio data signal of the speech voice of the person C received in step St44, in the RAM 31b (the example of the delay buffer) as the reference signal (the collected audio data) for the echo cancellation processing (step St45).

The charging case control unit 31 of the charging case 30a receives and acquires the audio data signals (that is, the audio-processed data of the other user speech voice transmitted from the laptop PCs 2b and 2c to the laptop PC 2a via the network NW1 during the remote web conference) transmitted from a line side (in other words, the network NW1 and the laptop PC 2a) (step St46). That is, the charging case control unit 31 of the charging case 30a acquires the audio-processed data of the other user speech voice (the audio data signal of the speech voice of the person B and the audio data signal of the speech voice of the person C) transmitted via the video and audio processing software installed in the laptop PCs 2b and 2c and the network NW1.

The charging case control unit 31 of the charging case 30a executes the echo cancellation processing for canceling the collected audio data temporarily accumulated in step St45 as a component of the reference signal from the audio-processed data of the other user speech voice (the audio data signal of the speech voice of the person B and the audio data signal of the speech voice of the person C) acquired in step St46 (step St47). The processing itself in step St47 is a known technique, and thus the detailed description thereof will be omitted, but in order to effectively cancel the component of the collected audio data (the audio data signal of the speech voice of the person C) included in the audio-processed data of the other user speech voice, for example, the charging case control unit 31 of the charging case 30a executes the echo cancellation processing so as to cancel the component from the audio-processed data of the other user speech voice after executing delay processing for a certain time on the collected audio data (the audio data signal of the speech voice of the person C). Accordingly, the charging case control unit 31 of the charging case 30a can execute the echo cancellation processing with high accuracy on the component of the reference signal (for example, the audio data signal of the speech voice of the person C) included in the audio-processed data of the other user speech voice, and can clearly output the audio data signal of the speech voice of the person B, who is not located near the person A, from the speakers SPL1 and SPR1, thereby supporting improvement of the easiness of hearing of the person A.

The charging case control unit 31 of the charging case 30a outputs, as audio, an audio data signal after the echo cancellation processing in step St47 (that is, the audio data signal of the speech voice of the person B obtained by canceling the audio data signal of the speech voice of the person C) from the speakers SPL1 and SPR1 (step St48). After step St48, when a call ends (that is, the remote web conference ends) (step St49: YES), the processing of the charging case 30a shown in Fig. 18 ends.

On the other hand, after step St48, when the call does not end (that is, the remote web conference continues) (step St49: NO), the charging case 30a continuously repeats a series of processing from step St42 to step St48 until the call ends.

Similarly, the charging case control unit 31 of the charging case 30c receives and acquires the audio data signals (that is, the audio-processed data of the other user speech voice transmitted from the laptop PCs 2b and 2a to the laptop PC 2c via the network NW1 during the remote web conference) transmitted from a line side (in other words, the network NW1 and the laptop PC 2c) (step St56). That is, the charging case control unit 31 of the charging case 30c acquires the audio-processed data of the other user speech voice (the audio data signal of the speech voice of the person B and the audio data signal of the speech voice of the person A) transmitted via the video and audio processing software installed in the laptop PCs 2b and 2a and the network NW1.

The charging case control unit 31 of the charging case 30c executes the echo cancellation processing for canceling the collected audio data temporarily accumulated in step St55 as a component of the reference signal from the audio-processed data of the other user speech voice (the audio data signal of the speech voice of the person B and the audio data signal of the speech voice of the person A) acquired in step St56 (step St57). The processing itself in step St57 is a known technique, and thus the detailed description thereof will be omitted, but in order to effectively cancel the component of the collected audio data (the audio data signal of the speech voice of the person A) included in the audio-processed data of the other user speech voice, for example, the charging case control unit 31 of the charging case 30c executes the echo cancellation processing so as to cancel the component from the audio-processed data of the other user speech voice after executing the delay processing for a certain time on the collected audio data (the audio data signal of the speech voice of the person A). Accordingly, the charging case control unit 31 of the charging case 30c can execute the echo cancellation processing with high accuracy on the component of the reference signal (for example, the audio data signal of the speech voice of the person A) included in the audio-processed data of the other user speech voice, and can clearly output the audio data signal of the speech voice of the person B, who is not located near the person C, from the speakers SPL1 and SPR1, thereby supporting improvement of the easiness of hearing of the person C.

The charging case control unit 31 of the charging case 30c outputs, as audio, an audio data signal after the echo cancellation processing in step St57 (that is, the audio data signal of the speech voice of the person B obtained by canceling the audio data signal of the speech voice of the person A) from the speakers SPL1 and SPR1 (step St58). After step St58, when the call ends (that is, the remote web conference ends) (step St59: YES), the processing of the charging case 30c shown in Fig. 18 ends.

On the other hand, after step St58, when the call does not end (that is, the remote web conference continues) (step St59: NO), the charging case 30c continuously repeats a series of processing from step St52 to step St58 until the call ends.

As described above, a case of an earphone according to the fourth embodiment includes the earphones 1L1a and 1R1a to be worn by a user (for example, the person A) and an accessory case (the charging case 30a) connected to the earphones 1L1a and 1R1a so as to be able to perform data communication. The case of the earphone includes a communication interface (the USB communication I/F unit 34) capable of performing data communication with an own user terminal (the laptop PC 2a) communicably connected to at least one another user terminal (the laptop PC 2b, 2c, or 2d) via the network NW1, a second communication interface (the wireless communication unit 37) capable of performing data communication with another accessory case (the charging case 30c or 30d) connected to another earphone (the earphones 1L1c, 1R1c, 1L1d, or 1R1d) to be worn by at least one another user (for example, the person C or the person D) located near the user, a buffer (the RAM 31b) configured to accumulate collected audio data of a speech voice of the other user during a conference, which is collected by the other earphone and transmitted from the other accessory case, and a signal processing unit (the charging case control unit 31) configured to execute, by using audio-processed data (that is, an audio data signal subjected to predetermined signal processing by the video and audio processing software of the laptop PC 2b, 2c, or 2d) of the other user speech voice transmitted from the other user terminal to the own user terminal via the network NW1 during the conference and the collected audio data accumulated in the buffer, cancellation processing (the echo cancellation processing) for canceling a component of the speech voice of the other user included in the audio-processed data. Accordingly, in a conference (for example, the remote web conference) or the like in which a commuting participant (for example, the person A, the person C, and the person D) and a telecommuting participant (for example, the person B) are mixed, the case of the earphone uses, for the echo cancellation processing, an audio data signal of the speech voice of the other user during the remote web conference which is obtained by collecting, by the other earphone, the speech voices of the person C and the person D who are the other users located near a listener (for example, the person A who is located near the person C and the person D) and transmitting the speech voices from the other accessory case, and thus it is possible to efficiently prevent an omission in listening to a speech content of a user (for example, the person B, the person C, or the person D) other than the person A, and to support smooth progress of the conference or the like.

The signal processing unit (the charging case control unit 31) executes the delay processing for a certain time on the collected audio data (the audio data signals of the speech voices of the person C and the person D wirelessly transmitted from the charging cases 30c and 30d, respectively). The signal processing unit executes the cancellation processing (the echo cancellation processing) by using the audio-processed data (that is, the audio data signal subjected to the predetermined signal processing by the video and audio processing software of the laptop PC 2b, 2c, or 2d) and the collected audio data after the delay processing. Accordingly, the case of the earphone can cancel (delete) the respective components of the speech voice of the person C and the speech voice of the person D included in the audio-processed data of the other user speech voice (the audio data signal of the speech voice of the person B, the audio data signal of the speech voice of the person C, and the audio data signal of the speech voice of the person D) transmitted from the laptop PCs 2b, 2c, and 2d via the network NW1.

The certain time is an average time required for the communication interface (the USB communication I/F unit 34) to receive the audio-processed data from the other user terminal (the laptop PC 2b, 2c, or 2d) via the network NW1 and the own user terminal (the laptop PC 2a). The certain time is stored in the ROM 31a or the RAM 31b of the charging case 30a. Accordingly, the case of the earphone can execute the echo cancellation processing with high accuracy on the component of the reference signal (for example, the audio data signals of the speech voices of the person C and the person D wirelessly transmitted from the charging cases 30c and 30d, respectively) included in the audio-processed data of the other user speech voice, and can clearly output the audio data signal of the speech voice of the person B, who is not located near the person A, from the speakers SPL1 and SPR1, thereby supporting the improvement of the easiness of hearing of the person A.

The signal processing unit (the charging case control unit 31) is configured to cause the earphones 1L1a and 1R1a to output the audio-processed data after the cancellation processing. Accordingly, the case of the earphone can prevent an influence of the audio data signals of the speech voices of the person C and the person D who are located near the person A, and can output the audio data signal of the speech voice of the person B as audio.

Although various embodiments have been described above with reference to the accompanying drawings, the present disclosure is not limited thereto. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, components in the various embodiments described above may be combined freely in a range without deviating from the spirit of the invention.

### INDUSTRIAL APPLICABILITY

The present disclosure is useful as an earphone and a case of an earphone that prevent an omission in listening of a listener to a speech content and support smooth progress of a conference or the like in which a commuting participant and a telecommuting participant are mixed.

## Claims

1. An earphone to be worn by a user, comprising:
a communication interface capable of performing data communication with an own user terminal communicably connected to at least one another user terminal via a network;
a first microphone configured to collect a speech voice of at least one another user located near the user during a conference;
a buffer configured to accumulate collected audio data of the speech voice of the other user, which is collected by the first microphone; and
a signal processing unit configured to execute, by using audio-processed data of the other user speech voice transmitted from the other user terminal to the own user terminal via the network during the conference and the collected audio data accumulated in the buffer, cancellation processing for canceling a component of the speech voice of the other user included in the audio-processed data.

2. The earphone according to claim 1, wherein
the signal processing unit is configured to execute delay processing for a certain time on the collected audio data, and execute the cancellation processing using the audio-processed data and the collected audio data after the delay processing.

3. The earphone according to claim 2, wherein
the certain time is an average time required for the communication interface to receive the audio-processed data from the other user terminal via the network and the own user terminal.

4. The earphone according to claim 1, further comprising:
a speaker configured to output the audio-processed data after the cancellation processing.

5. An earphone to be worn by a user, comprising:
a communication interface capable of performing data communication with an own user terminal communicably connected to at least one another user terminal via a network and another earphone to be worn by at least one another user located near the user;
a buffer configured to accumulate collected audio data of a speech voice of the other user during a conference, which is collected by the other earphone and transmitted from the other earphone; and
a signal processing unit configured to execute, by using audio-processed data of the other user speech voice transmitted from the other user terminal to the own user terminal via the network during the conference and the collected audio data accumulated in the buffer, cancellation processing for canceling a component of the speech voice of the other user included in the audio-processed data.

6. The earphone according to claim 5, wherein
the signal processing unit is configured to execute delay processing for a certain time on the collected audio data, and execute the cancellation processing using the audio-processed data and the collected audio data after the delay processing.

7. The earphone according to claim 6, wherein
the certain time is an average time required for the communication interface to receive the audio-processed data from the other user terminal via the network and the own user terminal.

8. The earphone according to claim 5, further comprising:
a speaker configured to output the audio-processed data after the cancellation processing.

9. A case of an earphone to be worn by a user, the case being connected to the earphone such that data communication can be performed, the case comprising:
a communication interface capable of performing data communication with an own user terminal communicably connected to at least one another user terminal via a network;
an accessory case microphone configured to collect a speech voice of at least one another user located near the user during a conference;
a buffer configured to accumulate collected audio data of the speech voice of the other user, which is collected by the accessory case microphone; and
a signal processing unit configured to execute, by using audio-processed data of the other user speech voice transmitted from the other user terminal to the own user terminal via the network during the conference and the collected audio data accumulated in the buffer, cancellation processing for canceling a component of the speech voice of the other user included in the audio-processed data.

10. The case of an earphone according to claim 9, wherein
the signal processing unit is configured to execute delay processing for a certain time on the collected audio data, and execute the cancellation processing using the audio-processed data and the collected audio data after the delay processing.

11. The case of an earphone according to claim 10, wherein
the certain time is an average time required for the communication interface to receive the audio-processed data from the other user terminal via the network and the own user terminal.

12. The case of an earphone according to claim 9, wherein
the signal processing unit is configured to cause the earphone to output the audio-processed data after the cancellation processing.

13. A case of an earphone to be worn by a user, the case being connected to the earphone such that data communication can be performed, the case comprising:
a first communication interface capable of performing data communication with an own user terminal communicably connected to at least one another user terminal via a network;
a second communication interface capable of performing data communication with another accessory case connected to another earphone to be worn by at least one another user located near the user;
a buffer configured to accumulate collected audio data of a speech voice of the other user during a conference, which is collected by the other earphone and transmitted from the other accessory case; and
a signal processing unit configured to execute, by using audio-processed data of the other user speech voice transmitted from the other user terminal to the own user terminal via the network during the conference and the collected audio data accumulated in the buffer, cancellation processing for canceling a component of the speech voice of the other user included in the audio-processed data.

14. The case of an earphone according to claim 13, wherein
the signal processing unit is configured to execute delay processing for a certain time on the collected audio data, and execute the cancellation processing using the audio-processed data and the collected audio data after the delay processing.

15. The case of an earphone according to claim 14, wherein
the certain time is an average time required for the first communication interface to receive the audio-processed data from the other user terminal via the network and the own user terminal.

16. The case of an earphone according to claim 13, wherein
the signal processing unit is configured to cause the earphone to output the audio-processed data after the cancellation processing.
